# EUROPÄISCHE PATENTSCHRIFT

(11) **EP 4 076 869 B1**
(45) Veröffentlichungstag und Bekanntmachung des Hinweises auf die Patenterteilung: **03.04.2024**
(21) Anmeldenummer: 20845372.0
(22) Anmeldetag: 16.12.2020
(51) Int. Cl.: B25J 15/04, B25J 15/06

(54) **UNTERDRUCK-GREIFERELEMENT UND UNTERDRUCK-GREIFERVORRICHTUNG**
VACUUM GRIPPER ELEMENT AND VACUUM GRIPPER DEVICE
ÉLÉMENT DE PRÉHENSION À PRESSION NÉGATIVE ET DISPOSITIF DE PRÉHENSION À PRESSION NÉGATIVE

(30) Priorität: 18.12.2019 AT 511072019
(43) Veröffentlichungstag der Anmeldung: 26.10.2022
(73) Patentinhaber: TRUMPF Maschinen Austria GmbH & Co. KG., 4061 Pasching (AT)
(72) Erfinder: ANGERER, Gerhard, 4203 Altenberg (AT); FREUDENTHALER, Klemens, 4020 Linz (AT); HAUSMANN, Florian, 4050 Traun (AT); HÖRL, Matthias, 4020 Linz (AT); KOVJENIC, Nenad, 4040 Linz (AT); MAIER, Florian, 4060 Leonding (AT); SCHERNHAMMER, Michael, 4060 Leonding (AT); STEININGER, Verena, 4020 Linz (AT); THEIS, Helmut, 4540 Pfarrkirchen (AT)
(74) Vertreter: Burger, Hannes
(86) Internationale Anmeldenummer: PCT/AT2020/060463
(87) Internationale Veröffentlichungsnummer: WO 2021/119698

(56) Entgegenhaltungen:
- CN-U- 207 773 667
- JP-U- H0 729 311
- JP-U- S57 122 388
- TW-U- M 492 901

## Beschreibung

Die Erfindung betrifft ein Unterdruck-Greiferelement und eine Unterdruck-Greifervorrichtung welche dazu ausgebildet sind, bei Beaufschlagung mit Unterdruck ein zu transportierendes Bauteil anzusaugen bzw. zu halten.

In modernen Bearbeitungszentren erfolgt der Werkstück- bzw. Bauteiltransport häufig vollautomatisiert. Zur Manipulation von Bauteilen, insbesondere von Biegewerkstücken und Profilen, hat sich die Verwendung von Vakuumgreifern weithin etabliert. Diese Greifer müssen, insbesondere für die Herstellung von Sonderanfertigungen bzw. auch bei kleinen Stückzahlen, eigens konstruiert, beschafft und montiert werden. Durch diese notwendigen Maßnahmen werden die Stückkosten nachteilig beeinflusst. Zudem tragen auch die damit einhergehenden langen Lieferzeiten zu einer Unwirtschaftlichkeit dieser Fertigungen bei.

Dem Fachmann sind zur Manipulation von Bauteilen oder Werkstücken Sauggreifer mit einer Mehrzahl von Saugnäpfen an einem gemeinsamen Greiferkopf bekannt. Hierzu beschreibt der Stand der Technik eine Vielzahl an Sauggreifern, welche jedoch für den Einsatz als Greifer für Sonder- und Einzelanfertigungen nur bedingt geeignet sind. Um die Wirtschaftlichkeit von Sonder- und Einzelanfertigungen bei Greifern zu erhöhen, sind gemäß dem Stand der Technik diverse baulich komplexe Ansätze zum Verbinden von Unterdruck-Greiferelementen mit Flanschplatten bekannt.

Die DE 102012006590 A1 offenbart beispielsweise eine Saugvorrichtung mit Ejektor, wobei ein Haltebolzen eine Nut aufweist, die mit einer Verriegelungsplatte in Eingriff tritt, wobei die Verriegelungsplatte ein Verriegelungselement aufweist, so dass dann, wenn das Verriegelungselement mit der Nut in Eingriff tritt, der Haltebolzen zu einer Seite der Adapterplatte gezogen wird, und das Saugpolster zwischen der Adapterplatte und dem Haltebolzen gehalten wird. Des Weiteren weist dieser Haltebolzen einen Vakuumdurchgang auf, der mit dem Inneren des Saugpolsters in Verbindung steht und der außerdem mit einem Unterdruckerzeugungsabschnitt des Ejektors in Verbindung steht.

In der DE 102012003192 A1 wird eine Vakuum-Spannvorrichtung vorgeschlagen, die einen Sauggreifer aufweist, der sich aus einer einen Saugnapf aufweisenden Saugeinheit und einer Steckverbindungseinheit zusammensetzt. Die Saugeinheit verfügt über einen rohrförmigen Befestigungsstutzen, mit dem sie in die Steckverbindungseinheit einsteckbar und diesbezüglich lösbar fixierbar ist. Der eingesteckte Befestigungsstutzen wird durch mindestens ein federelastisch bewegliches Klemmelement gehalten und kann durch manuelle Betätigung von Lösemitteln wieder entnommen werden.

Aus der JP H0729311 U, der JP S57122388 U und der TW M492901 U sind der Fachwelt diverse Anordnungen von Saugelementen mit Mechanismen zum Wechseln eines napfförmigen Dichtelements bekannt.

Aufgabe der vorliegenden Erfindung war es, die Nachteile des Standes der Technik zu überwinden und eine Vorrichtung zur Verfügung zu stellen, mittels derer ein Benutzer in der Lage ist, das Handling von plattenförmigen Bauteilen möglichst wirtschaftlich zu gestalten, insbesondere auch dann, wenn Bauteile in nur geringer Stückzahl vorliegen bzw. Sonderanfertigungen zu fertigen bzw. zu manipulieren sind.

Diese Aufgabe wird durch ein Unterdruck-Greiferelement und durch eine Unterdruck-Greifervorrichtung gemäß den Ansprüchen gelöst.

Das erfindungsgemäße Unterdruck-Greiferelement dient dazu, bei Beaufschlagung mit Unterdruck ein zu transportierendes Bauteil anzusaugen oder zu halten. Das Unterdruck-Greiferelement umfasst:
- einen Basiskörper mit wenigstens einem Unterdruck-Versorgungskanal,
- ein elastisches, formflexibles Dichtelement, welches mit dem Basiskörper verbunden ist und zur abdichtenden Anlage an dem zu transportierenden Bauteil vorgesehen ist,
- ein erstes Befestigungsmittel am Basiskörper zur Befestigung des Unterdruck-Greiferelementes an einer Tragvorrichtung, wobei der Basiskörper und das Dichtelement entlang einer Hauptachse des Unterdruck-Greiferelementes angeordnet sind.

Dabei ist weiters vorgesehen, dass das erste Befestigungsmittel durch eine Rastkupplung zum bedarfsweisen formschlüssigen Verbinden und Lösen des Unterdruck-Greiferelementes gegenüber der Tragvorrichtung gebildet ist, oder dass der Basiskörper ein erstes Basiskörperteil und ein zweites Basiskörperteil umfasst, welches erste Basiskörperteil mittels dem ersten Befestigungsmittel zum bedarfsweisen formschlüssigen Verbinden und Lösen gegenüber der Tragvorrichtung vorgesehen ist, und welches zweite Basiskörperteil mit dem elastischen, formflexiblen Dichtelement verbunden ist, und dass ein zweites Befestigungsmittel zum bedarfsweisen formschlüssigen Verbinden und Lösen des ersten Basiskörperteils gegenüber dem zweiten Basiskörperteil durch eine Rastkupplung gebildet ist.

Der dadurch erzielte Vorteil liegt vor allem darin, dass mit einem derart ausgestalteten Unterdruck-Greiferelement die Möglichkeit geschaffen wird, Bauteile in geringer Stückzahl bzw. Sonderanfertigungen auf wirtschaftliche Art und Weise zu fertigen. Insbesondere ermöglicht die konstruktiv einfache, aber dennoch funktionszuverlässige Ausführung des Unterdruck-Greiferelements mit - im Vergleich zum Stand der Technik - wenigen Bauteilen bzw. Komponenten eine besonders effiziente Montage und Demontage, sodass das Unterdruck-Greiferelement rasch einsatzbereit ist.

Der Umstand, dass das Unterdruck-Greiferelement aus nur wenigen Komponenten gebildet ist, erleichtert auch die Wiederbeschaffungszeit und trägt maßgeblich zu einer effizienten Lagerhaltung bei.

Die Ausbildung des Unterdruck-Greiferelements mit einem ersten Befestigungsmittel, welches durch eine vorzugsweise manuell betätigbare Rastkupplung zum bedarfsweisen formschlüssigen Verbinden und Lösen des Unterdruck-Greiferelementes gegenüber der Tragvorrichtung, gebildet ist hat den großen Vorteil, dass einfach und gegebenenfalls auch werkzeuglos und/oder automatisiert, eine effiziente Montage und Demontage des Unterdruck-Greiferelements an einem Tragelement erfolgen kann. Zudem kann eine effiziente Montage und Demontage auch von weniger geübtem Montagepersonal relativ rasch und fehlersicher erfolgen.

Vorteilhaft ist auch die Ausbildung des Unterdruck-Greiferelements, bei welchem der Basiskörper ein erstes Basiskörperteil und ein zweites Basiskörperteil umfasst, wobei das erste Basiskörperteil mittels dem ersten Befestigungsmittel zum bedarfsweisen formschlüssigen Verbinden und Lösen gegenüber der Tragvorrichtung vorgesehen ist. Hierbei ist das zweite Basiskörperteil mit dem elastischen, formflexiblen Dichtelement verbunden. Ein zweites Befestigungsmittel ist zum bedarfsweisen formschlüssigen Verbinden und Lösen des ersten Basiskörperteils gegenüber dem zweiten Basiskörperteil durch eine Rastkupplung gebildet. Diese Ausbildung hat den Vorteil, dass eine Vormontage des ersten Basiskörperteils auf der Tragvorrichtung möglich ist und dass das zweite Basiskörperteil mittels der Rastkupplung auf effiziente Art und Weise montierbar und demontierbar ist.

Der Mechanismus der Rastkupplung trägt zudem auch zu einer Erhöhung der Sicherheit für das Montage- oder Bedienungspersonal bei, da die Montage bzw. die Demontage rasch und einfach erfolgen können und somit ein unerwünschtes herabfallen von einzelnen Komponenten oder dem gesamten Unterdruck-Greiferelement weitgehend unterbunden werden kann.

Des Weiteren ist vorgesehen, dass der Basiskörper einen hohlzylindrischen Befestigungsabschnitt aufweist, in bzw. an welchem die Rastkupplung ausgebildet ist. Hohlzylindrische Werkstücke können vorteilhafterweise einfach mit Standardfertigungsverfahren angefertigt werden. Dadurch wird eine Befestigung des Unterdruck-Greiferelementes an der Tragvorrichtung kostengünstig und einfach ermöglicht. Zudem kann der hohlzylindrische Montageabschnitt einen Bestandteil des Unterdruck-Versorgungskanals definieren, wodurch eine kompakte und mehrfunktionale Konstruktion geschaffen ist. Des Weiteren ist eine hohlzylindrische Ausführung des Befestigungsabschnittes einfach gegenüber der Umgebung abdichtbar. Eine einfache, wirksame und kostengünstige Abdichtung kann beispielsweise über einen Dichtring realisiert werden.

Ferner ist vorgesehen, dass die Rastkupplung ein Betätigungselement, ein Federelement und wenigstens ein Rastelement umfasst, wobei das Federelement das Betätigungselement in eine Endposition drängt, und wobei das wenigstens eine Rastelement vom Betätigungselement in eine Verriegelungsposition gedrängt ist. Das Vorsehen von nur wenigen baulichen Komponenten in der Rastkupplung hat den Vorteil, dass einfache Mechaniken in der Regel eine erhöhte Ausfallsicherheit bieten bzw. wenig stör- und fehleranfällig sind. Die Eigenschaft, dass das Federelement das Betätigungselement in eine Endposition drängt bringt den Vorteil, dass dadurch vom Unterdruck-Greiferelement bzw. von der Rastkupplung tendenziell die verriegelnde Endposition als Standardzustand angestrebt wird. Zudem sind Federelemente baulich in der Regel einfache und günstige Standardbauteile. Wenn zudem das Rastelement vom Betätigungselement in eine Verriegelungsposition gedrängt ist, kann das Betätigungselement zusätzlich verstärkt in seiner Endposition gehalten werden. Diese Ausbildung bewirkt somit, dass das Unterdruck-Greiferelement bevorzugt in seiner Endposition verbleibt. So wird ermöglicht, dass das Unterdruck-Greiferelement stabil und sicher, aber trotzdem mit verhältnismäßig geringem Montage- und Kraftaufwand mit der Tragvorrichtung verbunden werden kann.

Darüber hinaus kann vorgesehen sein, dass das zumindest eine Rastelement radial zur Hauptachse verstellbar gelagert ist. So wird eine Möglichkeit geschaffen, dass das erste oder zweite Befestigungsmittel durch eine Rastkupplung zum bedarfsweisen formschlüssigen Verbinden und Lösen des Unterdruck-Greiferelementes gegenüber der Tragvorrichtung gebildet ist. Die radiale Verstellbarkeit der Rastelemente, beispielsweise in radialen Bohrungen im hohlzylindrischen Befestigungsabschnitt des Unterdruck-Greiferelements, bringt zudem den positiven Effekt, dass die Rastelemente ihre Verriegelungsposition schnell einnehmen können, bzw. auch schnell wieder aus dieser Verriegelungsposition gebracht werden können.

Vorteilhaft ist auch eine Ausprägung, gemäß welcher vorgesehen sein kann, dass das zumindest eine Rastelement als Kugel ausgebildet ist, insbesondere durch zumindest drei, vorzugsweise fünf, über den Kreisumfang des hohlzylindrischen Befestigungsabschnittes verteilt angeordnete Kugeln gebildet ist. Kugeln sind, wie auch das Federelement, Standardbauteile und somit sowohl kostengünstig, als auch einfach und rasch beschaffbar. Die über den Kreisumfang des hohlzylindrischen Befestigungsabschnittes verteilte Anordnung bringt den Vorteil, dass eine Verbindung zwischen Unterdruck-Greiferelement und Tragvorrichtung stabil und sicher realisiert werden kann. Insbesondere ist eine gleichmäßige Verteilung der Kugeln über den Kreisumfang des hohlzylindrischen Befestigungsabschnittes bevorzugt, da dies eine gleichmäßige Kraftverteilung bewirken kann.

Weiters ist vorgesehen, dass das Betätigungselement innerhalb des hohlzylindrischen Befestigungsabschnitts angeordnet ist und entlang der Hauptachse verstellbar gelagert ist. Dieser Aufbau kann zur Einfachheit des Betätigungselementes und dessen Funktionalität beitragen.

Ferner kann es zweckmäßig sein, wenn das Betätigungselement schieber- oder kolbenartig ausgeführt ist und an seiner äußeren Betätigungselement-Mantelfläche wenigstens eine zur Hauptachse geneigte Kontaktfläche zu dem wenigstens einen Rastelement aufweist. Die schieber- oder kolbenartige Ausführung kann vorteilhaft in Bezug auf die Funktionalität des Betätigungselements sein. Eine zur Hauptachse geneigte Kontaktfläche des Betätigungselements zu dem wenigstens einen Rastelement kann den wünschenswerten Effekt bringen, dass das je nach Neigungswinkel der Kontaktfläche und Geometrie der Rastelemente die erforderliche Klemmwirkung angepasst werden kann bzw. eine funktionszuverlässige Selbsthemmung erzielt werden kann.

Gemäß einer Weiterbildung ist es möglich, dass an der inneren Mantelfläche des zweiten Basiskörperteils eine ringnutförmige Innenmantel-Einkerbung zur Aufnahme des wenigstens einen Rastelementes ausgebildet ist. Diese Weiterbildung kann das bedarfsweise formschlüssige Verbinden und Lösen des ersten Basiskörperteils gegenüber dem zweiten Basiskörperteil erleichtern, indem das wenigstens eine Rastelement in dieser Innenmantel-Einkerbung Aufnahme findet.

Darüber hinaus kann vorgesehen sein, dass der hohlzylindrische Befestigungsabschnitt ausgehend von seinem axialen Stirnende in Richtung zum Dichtelement durch wenigstens eine Anschlagfläche begrenzt ist. Die Anschlagfläche kann auf vorteilhafte Art und Weise der Kontaktierung mit der Tragvorrichtung dienen und eine eindeutige Relativpositionierung gegenüber der Tragvorrichtung gewährleisten. So kann eine Klemmwirkung verstärkt werden und eine stabile und sichere Verbindung zwischen Unterdruck-Greiferelement und Tragvorrichtung erzeugt werden.

Des Weiteren kann vorgesehen sein, dass eine Kraftwirkung des Federelementes auf das Betätigungselement ausgehend von einem freien axialen Stirnende des Basiskörpers in Richtung zum Dichtelement wirkt. So wird die Möglichkeit geschaffen, dass das Federelement das Betätigungselement in Richtung zum Dichtelement schiebt bzw. drückt und somit das Betätigungselement in seiner diesbezüglichen, axialen Endposition gehalten werden kann. Dies ist insbesondere insofern vorteilhaft, als hierdurch die Montierbarkeit des Unterdruck-Greiferelementes an der Tragvorrichtung erleichtert werden kann.

Gemäß einer besonderen Ausprägung ist es möglich, dass eine Kraftwirkung des Federelementes auf das Betätigungselement ausgehend vom Dichtelement in Richtung zum freien axialen Stirnende des Basiskörpers wirkt. So wird die Möglichkeit geschaffen, dass das Federelement das Betätigungselement vom Dichtelement wegschiebt bzw. wegdrückt. Diese Ausprägung bringt den Vorteil, dass das Unterdruck-Greiferelement einfach bzw. komfortabel demontiert werden kann.

Weiters ist vorgesehen, dass das Betätigungselement eine Betätigungsfläche aufweist, welche zur Druckbeaufschlagung ausgehend von einem baulich gesonderten, stiftförmigen Betätigungswerkzeug vorgesehen ist. Dieses stiftförmige Betätigungswerkzeug kann dabei sowohl zur manuellen Betätigung durch einen Bediener ausgebildet sein, aber auch zur automatisierten Betätigung, beispielsweise durch einen Manipulator, dienen.

Bei dem stiftförmigen Betätigungswerkzeug kann es sich beispielsweise um einen stabilen Gegenstand wie einen Schraubenzieher handeln. Es ist aber auch denkbar und vorteilhaft, wenn ein flexibler Gegenstand zur Druckbeaufschlagung an der Betätigungsfläche eingesetzt wird. Hier ist denkbar, ein Schlauchstück, insbesondere ein Pneumatik-Schlauchstück einzusetzen.

Stiftförmige Betätigungswerkzeuge, welche automatisiert von einem Manipulator geführt werden, aber auch manuell geführte Betätigungswerkzeuge können auch einen ebenen bzw. plattenförmigen Bereich aufweisen. Dies kann insbesondere dann vorteilhaft sein, wenn die Kraftwirkung des Federelementes auf das Betätigungselement ausgehend von dem freien axialen Stirnende des Basiskörpers in Richtung zum Dichtelement wirkt. Hierbei muss die Betätigungsfläche ausgehend vom Dichtelement in Richtung zum freien axialen Stirnende betätigt werden. Der ebene bzw. plattenförmige Bereich des stiftförmigen Betätigungswerkzeuges kann mit dem Dichtelement in Kontakt kommen, wodurch das Dichtelement durch die Druckbeaufschlagung nach unten gedrückt wird. Der ebene bzw. plattenförmige Bereich des stiftförmigen Betätigungswerkzeuges kann mit einer Unterdruck-Versorgungsleitung ausgebildet sein, über welche Unterdruck-Versorgungsleitung ein Unterdruck im Dichtelement anlegbar ist. So kann zugleich eine Betätigung der Betätigungsfläche in Verbindung mit einem kontrollierten Abheben des Unterdruck-Greiferelementes von der Tragvorrichtung erfolgen. Bedarfsweise kann die Unterdruck-Versorgungsleitung mit einer Unterdruckerzeugungsvorrichtung, insbesondere einer Vakuum-Pumpe, verbindbar sein. Damit zwischen Dichtelement und dem ebenen bzw. plattenförmigen Bereich des stiftförmigen Betätigungswerkzeuges ein Unterdruck bestehen kann, kann es vorteilhaft sein, wenn der stiftförmige Bereich des stiftförmigen Betätigungswerkzeuges zur Abdichtung des Unterdruck-Versorgungskanals im Basiskörper ausgebildet ist. Diese Abdichtwirkung kann beispielsweise mittels einer Dichtung am Stiftmantel erzielt werden. Erfolgt die Führung des stiftförmigen Betätigungswerkzeuges automatisiert von einem Manipulator, so kann es zudem zweckmäßig sein, wenn zugleich mehrere Unterdruck-Greiferelemente von der Tragvorrichtung demontiert werden können.

Insgesamt wird mit einem Betätigungselement, welches eine Betätigungsfläche aufweist eine einfache und dennoch effektive Bauweise realisiert, wobei - etwa im Vergleich zu einer hohlzylindrischen Schiebehülse - ein kostengünstiger und einfach handhabbarer Aufbau geschaffen wird.

Vorteilhaft ist auch eine Weiterbildung, gemäß welcher das Betätigungselement eine den Unterdruck-Versorgungskanal begrenzende Wirkfläche aufweist, welche Wirkfläche derart dimensioniert ist, dass beim Vorliegen von Unterdruck im Unterdruck-Versorgungskanal das Betätigungselement verstärkt in Richtung seiner Endposition gedrängt ist. So wird der Effekt erzielt, dass die Schließkraft der Feder über die Wirkfläche verstärkt wird. Dies führt zum einen dazu, dass mit dem Unterdruck-Greiferelement im Einsatzfall eine sichere und stabile Verbindung mit einem zu manipulierenden bzw. zu transportierenden Bauteil geschaffen werden kann. Zum anderen reduziert sich die Gesamtschließkraft bei Entfernen des Unterdrucks wieder um diesen Kraftanteil. Dadurch ist der erforderliche Kraftaufwand bei der Montage bzw. Demontage um ebendiesen Kraftanteil geringer und kann somit mühelos erfolgen.

Des Weiteren kann es vorteilhaft sein, wenn im Unterdruck-Versorgungskanal ein Sperrventil, insbesondere ein Rückschlagventil, ausgebildet ist, welches beim Vorliegen eines Überdruckes im Unterdruck-Versorgungskanal den Unterdruck-Versorgungskanal in Richtung zum Dichtelement verschließt. So wird die Möglichkeit einer automatischen bzw. teilautomatischen Demontage geschaffen. Das Rückschlagventil bewirkt bei dessen Ansprechen einen luftdichten bzw. annähernd luftdichten Abschluss des Dichtelements bzw. des Unterdruck-Greiferelements gegenüber der Umgebung. Der sich infolgedessen im Unterdruck-Versorgungskanal und auch im Dichtelement aufbauende Überdruck bewirkt ein Loslösen des Dichtelementes von einem zu transportierenden Bauteil oder auch von einem Demontage-Hilfswerkzeug.

In einer weiteren Ausbildung kann vorgesehen sein, dass das Betätigungselement eine den Unterdruck-Versorgungskanal begrenzende Wirkfläche aufweist, welche Wirkfläche derart dimensioniert ist, dass beim Vorliegen von Überdruck im Unterdruck-Versorgungskanal das Betätigungselement in Richtung seiner das wenigstens eine Rastelement deaktivierenden Position gedrängt ist. Insbesondere in Kombination mit dem zuvor beschriebenen Sperrventil kann hier die Möglichkeit einer automatischen bzw. teilautomatischen Demontage des Unterdruck-Greiferelements gegenüber einer Tragvorrichtung geschaffen werden. Da der Überdruck nicht über das Sperrventil entweichen kann, übt dieser eine Kraftwirkung auf die Wirkfläche des Betätigungselements aus und initiiert somit eine Bewegung des Betätigungselementes aus seiner End- bzw. Verriegelungsposition in seine Freigabeposition für das wenigstens eine Rastelement, wodurch es zu einem kontrollierten Entriegeln der Rastkupplung kommen kann.

Ferner kann es zweckmäßig sein, dass in Bezug auf die Hauptachse zwischen dem hohlzylindrischen Befestigungsabschnitt und dem Dichtelement ein Versorgungsabschnitt ausgebildet ist. Der Versorgungsabschnitt dient dabei insbesondere der Versorgung mit Unter- und/oder Überdruck. Eine Ausbildung des Versorgungsabschnittes zwischen Befestigungsabschnitt und Dichtelement bringt den Vorteil, dass hierdurch die Montage bzw. Demontage von pneumatischen Schlauchverbindungen zwischen den Unterdruck-Versorgungselementen einfach und leicht zugänglich erfolgen kann.

Darüber hinaus kann vorgesehen sein, dass der Versorgungsabschnitt zum Versorgen des Unterdruck-Greiferelementes mit Unterdruck am ersten Basiskörperteil ausgebildet ist. Diese Maßnahme kann auf vorteilhafte Art und Weise eine Montage und auch Demontage erleichtern. Beispielsweise ist hierbei denkbar, dass Schlauchkupplungen bzw. Schläuche zur Verbindung mit einer Unterdruckerzeugungsvorrichtung bereits bei der Montage des ersten Basiskörperteiles vorgesehen werden, sodass eine Endmontage, im Zuge welcher das zweite Basiskörperteil montiert wird, besonders schnell und unkompliziert erfolgen kann.

Gemäß einer besonderen Ausprägung ist es möglich, dass der Versorgungsabschnitt zum Versorgen des Unterdruck-Greiferelementes mit Unterdruck am zweiten Basiskörperteil ausgebildet ist. Auch diese Maßnahme kann auf vorteilhafte Art und Weise eine Montage und auch Demontage erleichtern. Insbesondere kann diese Ausprägung den positiven Effekt bringen, dass das erste Basiskörperteil einfach und schnell montiert werden kann, da etwaige Schlauchkupplungen und/oder Schläuche erst bei der nachfolgenden Endmontage des zweiten Basiskörperteils vorgesehen werden. Darüber hinaus kann vorgesehen sein, dass im Versorgungsabschnitt ein Unterdruck-Versorgungsanschluss, insbesondere wenigstens eine werkzeuglos betätigbare Schlauchkupplung, ausgebildet ist und mit dem Unterdruck-Versorgungskanal strömungsverbunden ist und dass der Unterdruck-Versorgungsanschluss über einen Schlauch mit einer Unterdruckerzeugungsvorrichtung bedarfsweise verbindbar ist. Diese Weiterbildung trägt auf vorteilhafte Art und Weise zu einer komfortablen und sicheren Montage bzw. Demontage bei.

Entsprechend einer vorteilhaften Weiterbildung kann vorgesehen sein, dass der Unterdruck-Versorgungskanal nach dem formschlüssigen Verbinden des ersten Basiskörperteils gegenüber dem zweiten Basiskörperteil mittels der Rastkupplung strömungsdicht ausgebildet ist. Diese Weiterbildung kann den Vorteil bringen, dass in einem Arbeitsgang, insbesondere direkt durch das formschlüssige Verbinden der beiden Basiskörperteile, ein strömungsdichter Unterdruck-Versorgungskanal ausgebildet ist. Dies kann sich positiv auf die Montagedauer auswirken.

Darüber hinaus kann vorgesehen sein, dass das erste Befestigungsmittel durch einen in einer ringnutförmigen Außenmantel-Einkerbung an der äußeren Mantelfläche des ersten Basiskörperteils angeordneten Federring gebildet ist. Federringe sind kostengünstige Bauteile und einfach und zweckmäßig in der Handhabung. Bei der Montage und Demontage kann der Federring aufgrund seiner Federwirkung in seinem Umfang komprimiert werden, wodurch sich der Federring vorübergehend in die ringnutförmige Außenmantel-Einkerbung bewegen lässt. So kann die Klemmwirkung zwischen Federring und Tragvorrichtung kurzzeitig deaktiviert werden und eine Montage bzw. Demontage erleichtert werden.

Ferner kann es zweckmäßig sein, wenn das erste Befestigungsmittel durch ein an der äußeren Mantelfläche des ersten Basiskörperteils angeordnetes Gewinde gebildet ist. Gewinde sind stabile und sichere Befestigungsmittel. Insbesondere durch das Vorsehen eines Außengewindes an der äußeren Mantelfläche des ersten Basiskörperteils und eines Innengewindes an der inneren Mantelfläche eines Durchbruchs in der Tragvorrichtung, kann eine rasche und sichere Befestigung realisiert werden. Es kann zusätzlich auch zweckmäßig sein, wenn zur Sicherung dieser Verbindung zusätzlich eine Mutter auf einen über die Tragvorrichtung hinausreichende Abschnitt des ersten Basiskörperteils aufgeschraubt wird.

Des Weiteren kann vorgesehen sein, dass der erste Basiskörperteil ausgehend vom Dichtelement in Richtung zu einem axialen Stirnende durch wenigstens eine Flanschfläche begrenzt ist. Diese Flanschfläche kann als Anschlagfläche wirkend, zur Stabilität der Befestigung des ersten Befestigungsmittels mit der Tragvorrichtung beitragen. Diese Flanschfläche kann beispielsweise auf einer Mutter ausgebildet sein, oder auf einem baulich fix an dem ersten Basiskörperteil vorgesehenen Abschnitt ausgebildet sein.

Entsprechend einer vorteilhaften Weiterbildung kann vorgesehen sein, dass eine Unterdruck-Greifervorrichtung dazu ausgebildet ist, bei Beaufschlagung mit Unterdruck ein zu transportierendes Bauteil anzusaugen oder zu halten.

Die Unterdruck-Greifervorrichtung umfasst:
- eine Tragvorrichtung und wenigstens ein mit dem Tragvorrichtung bedarfsweise lösbar verbundenes Unterdruck-Greiferelement, insbesondere ein Unterdruck-Greiferelement gemäß den vorhergehend beschriebenen Ausbildungen.

Das Unterdruck-Greiferelement umfasst dabei:
- einen Basiskörper mit wenigstens einem Unterdruck-Versorgungskanal,
- ein elastisches, formflexibles Dichtelement, welches mit dem Basiskörper verbunden ist und zur abdichtenden Anlage an dem zu transportierenden Bauteil vorgesehen ist,
- ein erstes Befestigungsmittel am Basiskörper zur Befestigung des Unterdruck-Greiferelements an einer Tragvorrichtung, wobei der Basiskörper und das Dichtelement entlang einer Hauptachse des Unterdruck-Greiferelementes angeordnet sind.

Dabei ist weiters vorgesehen, dass das erste Befestigungsmittel durch eine Rastkupplung zum bedarfsweisen formschlüssigen Verbinden und Lösen des Unterdruck-Greiferelementes gegenüber der Tragvorrichtung gebildet ist, oder dass der Basiskörper ein erstes Basiskörperteil und ein zweites Basiskörperteil umfasst, welches erste Basiskörperteil mittels dem ersten Befestigungsmittel zum bedarfsweisen formschlüssigen Verbinden und Lösen gegenüber der Tragvorrichtung vorgesehen ist, und welches zweite Basiskörperteil mit dem elastischen, formflexiblen Dichtelement verbunden ist, und dass ein zweites Befestigungsmittel zum bedarfsweisen formschlüssigen Verbinden und Lösen des ersten Basiskörperteils gegenüber dem zweiten Basiskörperteil durch eine Rastkupplung gebildet ist.

Der dadurch erzielte Vorteil liegt vor allem darin, dass mit einem derart ausgestalteten Unterdruck-Greiferelement die Möglichkeit geschaffen wird, Bauteile in geringer Stückzahl bzw. Sonderanfertigungen auf wirtschaftliche Art und Weise zu fertigen. Insbesondere ermöglicht die konstruktiv einfache, aber dennoch funktionszuverlässige Ausführung des Unterdruck-Greiferelements mit - im Vergleich zum Stand der Technik - wenigen Bauteilen bzw. Komponenten eine effiziente Montage und Demontage, sodass das Unterdruck-Greiferelement rasch einsatzbereit ist.

Der Umstand, dass das Unterdruck-Greiferelement aus nur wenigen Komponenten gebildet ist, erleichtert auch die Wiederbeschaffungszeit und trägt maßgeblich zu einer effizienten Lagerhaltung bei.

Die Ausbildung des Unterdruck-Greiferelements mit einem ersten Befestigungsmittel, welches durch eine Rastkupplung zum bedarfsweisen formschlüssigen Verbinden und Lösen des Unterdruck-Greiferelementes gegenüber der Tragvorrichtung, gebildet ist hat den großen Vorteil, dass einfach und gegebenenfalls auch werkzeuglos und/oder automatisiert, eine effiziente Montage und Demontage erfolgen kann. Zudem kann eine effiziente Montage und Demontage auch von weniger geübtem Montagepersonal erfolgen.

Vorteilhaft ist auch die Ausbildung des Unterdruck-Greiferelements, bei welchem der Basiskörper ein erstes Basiskörperteil und ein zweites Basiskörperteil umfasst, wobei das erste Basiskörperteil mittels dem ersten Befestigungsmittel zum bedarfsweisen formschlüssigen Verbinden und Lösen gegenüber der Tragvorrichtung vorgesehen ist. Hierbei ist das zweite Basiskörperteil mit dem elastischen, formflexiblen Dichtelement verbunden. Ein zweites Befestigungsmittel ist zum bedarfsweisen formschlüssigen Verbinden und Lösen des ersten Basiskörperteils gegenüber dem zweiten Basiskörperteil durch eine Rastkupplung gebildet. Diese Ausbildung hat den Vorteil, dass eine Vormontage des ersten Basiskörperteils auf der Tragvorrichtung möglich ist und dass das zweite Basiskörperteil mittels der Rastkupplung auf effiziente Art und Weise montierbar und demontierbar ist. Der Mechanismus der Rastkupplung trägt zudem auch zu einer Erhöhung der Sicherheit für das Montagepersonal bei, da die Montage bzw. die Demontage rasch und einfach erfolgen können und somit ein unerwünschtes herabfallen von einzelnen Komponenten oder dem gesamten Unterdruck-Greiferelement weitgehend unterbunden werden kann.

Ferner kann vorgesehen sein, dass die Tragvorrichtung wenigstens einen Durchbruch zur Aufnahme des wenigstens einen Unterdruck-Greiferelements aufweist. Durch das Vorsehen eines Durchbruchs kann das Einsetzen des Unterdruck-Greiferelements bzw. der Rastkupplung in die Tragvorrichtung vereinfacht bzw. erleichtert werden.

Darüber hinaus kann vorgesehen sein, dass es sich bei dem wenigstens einen Durchbruch um eine kreisrunde Bohrung handelt. Eine Bohrung zur Aufnahme des Unterdruck-Greiferelements hat den positiven Effekt, dass Bohrungen mit einfachen und üblichen technischen Methoden hergestellt werden können. Dabei sind Bohrungen in der Regel mit ausreichend engen Toleranzen fertigbar und eignen sich folglich zur Aufnahme des Unterdruck-Greiferelements bzw. dessen Rastkupplung.

Ferner kann es zweckmäßig sein, wenn die kreisrunde Bohrung ein Gewinde zur Aufnahme des ersten Basiskörperteils aufweist. Diese Weiterbildung kann insbesondere durch das Vorsehen eines Außengewindes an der äußeren Mantelfläche des ersten Basiskörperteils und eines Innengewindes an der inneren Mantelfläche eines Durchbruchs in der Tragvorrichtung, zu einer raschen und sicheren Befestigung beitragen.

Vorteilhaft ist auch eine Ausprägung, gemäß welcher vorgesehen sein kann, dass die Tragvorrichtung in einem zentralen Abschnitt ein Kupplungsmittel zur bedarfsweisen Verbindung mit einem Manipulator aufweist. Die Kuppelbarkeit der Tragvorrichtung ist vorteilhaft in Bezug auf dessen Flexibilität bzw. Variabilität der Einsatzmöglichkeiten. Bei dem Manipulator kann es sich beispielsweise um einen Industrieroboter handeln.

Gemäß einer Weiterbildung ist es möglich, dass die Tragvorrichtung ein plattenförmiges Tragelement umfasst, welches plattenförmige Tragelement eben ausgebildet ist, oder in seinem Querschnitt hutschienenförmig oder C-förmig ausgebildet ist. Ebene plattenförmige Tragelemente sind besonders einfach und kostengünstig herzustellen und dennoch auf vielfältige Art und Weise einsetzbar. Plattenförmige Tragelemente mit hutschienenförmigen Querschnitten erleichtern die Fertigung von Bauteilen mit komplizierten Geometrien. Die Ausführung des plattenförmigen Tragelementes mit einem C-förmigen Querschnitt ist insbesondere bei Unterdruck-Greifervorrichtungen für den Transport von kleinen Bauteilen geeignet.

Ferner kann es zweckmäßig sein, wenn die Hauptachse des Unterdruck-Greiferelements in einem rechten Winkel zum plattenförmigen Tragelement angeordnet ist. Diese Ausprägung erleichtert nicht nur Montage und Demontage des Unterdruck-Greiferelements auf der Tragvorrichtung, sondern auch bereits die Planung und Fertigung der baulichen Komponenten.

Zum besseren Verständnis der Erfindung wird diese anhand der nachfolgenden Figuren näher erläutert.

Es zeigen jeweils in stark vereinfachter, schematischer Darstellung:
- Fig. 1: eine dreidimensionale Explosionsansicht einer ersten Ausführungsform einer Unterdruck-Greifervorrichtung mit sechs Unterdruck-Greiferelementen und einer Tragvorrichtung mit einem ebenen, plattenförmigen Tragelement;
- Fig. 2: eine dreidimensionale Explosionsansicht einer zweiten Ausführungsform einer Unterdruck-Greifervorrichtung mit sechs Unterdruck-Greiferelementen und einer Tragvorrichtung mit einem hutschienenförmigen, plattenförmigen Tragelement;
- Fig. 3: eine dreidimensionale Explosionsansicht einer dritten Ausführungsform einer Unterdruck-Greifervorrichtung mit sechs Unterdruck-Greiferelementen und einer Tragvorrichtung, mit einem C-förmigen, plattenförmigen Tragelement;
- Fig. 4: einen Längsschnitt einer ersten Ausführungsform eines an einer Tragvorrichtung montierten Unterdruck-Greiferelements;
- Fig. 5: einen Längsschnitt einer ersten Ausführungsform eines Unterdruck-Greiferelements während der Montage oder Demontage an einer Tragvorrichtung mit Betätigungswerkzeug;
- Fig. 6: einen Längsschnitt einer zweiten Ausführungsform eines an einer Tragvorrichtung montierten Unterdruck-Greiferelements;
- Fig. 7: einen Längsschnitt einer zweiten Ausführungsform eines Unterdruck-Greiferelements während der Montage oder Demontage an einer Tragvorrichtung mit Betätigungswerkzeug;
- Fig. 8: einen Längsschnitt einer dritten Ausführungsform eines an einer Tragvorrichtung montierten Unterdruck-Greiferelementes mit Betätigungswerkzeug;
- Fig. 9: eine dreidimensionale Ansicht einer vierten Ausführungsform eines Unterdruck-Greiferelementes ;
- Fig. 10: eine dreidimensionale Detailansicht einer vierten Ausführungsform einer Unterdruck-Greifervorrichtung mit einem Unterdruck-Greiferelement und pneumatischen Anschlüssen;
- Fig. 11: eine dreidimensionale Explosionsansicht einer fünften Ausführungsform einer Unterdruck-Greifervorrichtung mit sechs Unterdruck-Greiferelementen und einer Tragvorrichtung mit einem ebenen, plattenförmigen Tragelement;
- Fig. 12: einen Längsschnitt einer fünften Ausführungsform eines an einer Tragvorrichtung montierten Unterdruck-Greiferelements;
- Fig. 13: einen Längsschnitt einer fünften Ausführungsform eines Unterdruck-Greiferelements während der Montage oder Demontage mit Betätigungswerkzeug;
- Fig. 14: einen Längsschnitt einer fünften Ausführungsform eines Unterdruck-Greiferelements vor der Montage oder nach der Demontage;
- Fig. 15: einen Längsschnitt einer sechsten Ausführungsform eines an einer Tragvorrichtung montierten Unterdruck-Greiferelements.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

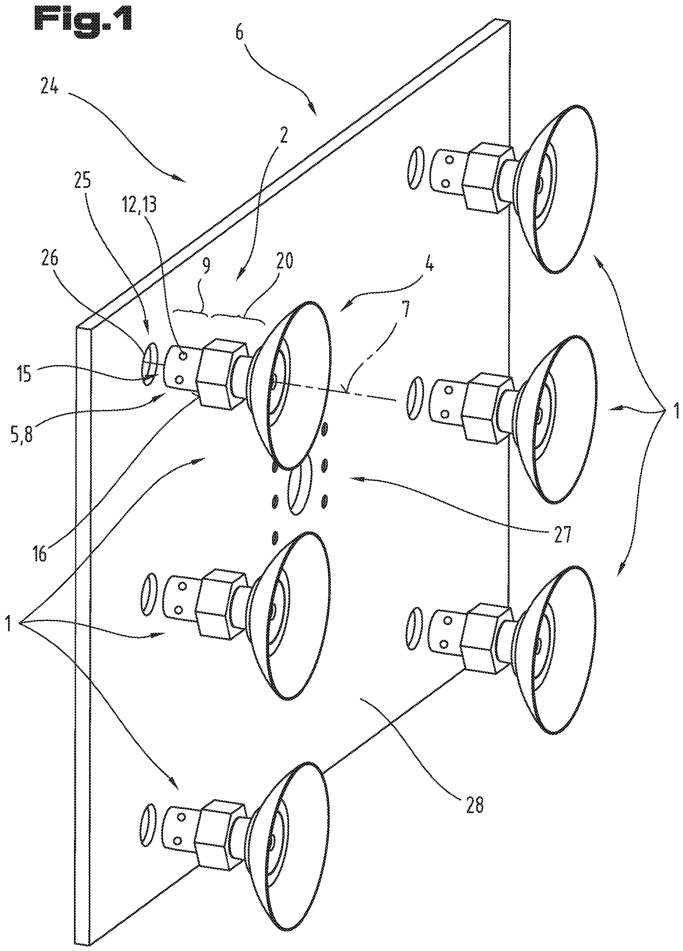

Figur 1 zeigt eine dreidimensionale Explosionsansicht einer ersten Ausführungsform einer Unterdruck-Greifervorrichtung 24 mit sechs Unterdruck-Greiferelementen 1 und einer Tragvorrichtung 6. Die Unterdruck-Greifervorrichtung 24 kann wie abgebildet eine Tragvorrichtung 6 und beispielsweise sechs mit der Tragvorrichtung 6 bedarfsweise lösbar verbundene Unterdruck-Greiferelemente 1 umfassen. Der Größe und dem Gewicht der zu transportierenden und/oder zu haltenden Bauteile angepasst, sind jedoch auch alternative Geometrien der Tragvorrichtung 6 denkbar. Auch Größe, Anzahl und Position der Unterdruck-Greiferelemente 1 können den spezifischen Anforderungen des zu transportierenden bzw. zu manipulierenden Bauteils angepasst werden.

Die Tragvorrichtung 6 umfasst in der dargestellten ersten Ausführungsform der Unterdruck-Greifervorrichtung 24 ein ebenes, plattenförmiges Tragelement 28 mit sechs Durchbrüchen 25 in der besonderen Ausbildung von kreisrunden Bohrungen 26. Die Tragvorrichtung 6, insbesondere das Tragelement 28 weist in einem zentralen Abschnitt ein Kupplungsmittel 27 zur bedarfsweisen Verbindung mit einem Manipulator auf. Das Kupplungsmittel 27 kann dabei selbstverständlich den Anforderungen verschiedener Roboterkupplungen angepasst werden und ist daher nur mittels Durchbrüche bzw. Bohrungen dargestellt.

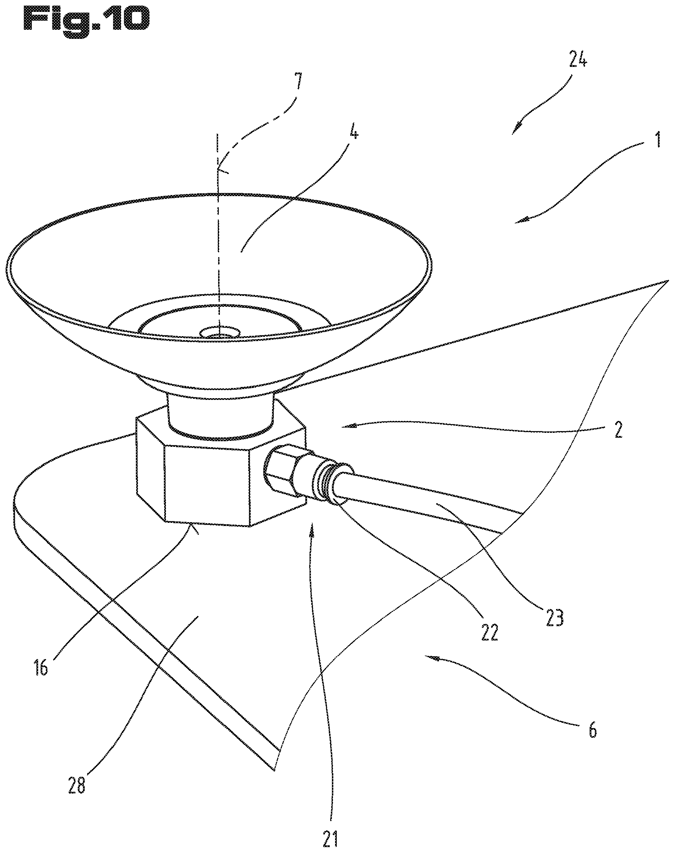

Die sechs in der Figur 1 dargestellten, baugleichen Unterdruck-Greiferelemente 1 bestehen gemäß dem Ausführungsbeispiel im Wesentlichen aus Basiskörper 2 und Dichtelement 4. Bei dem Dichtelement 4 handelt es sich im dargestellten Beispiel um eine formflexible, elastische Saugglocke aus Kunststoff. Der skizzierte Basiskörper 2 weist einen Befestigungsabschnitt 9 und einen Versorgungsabschnitt 20 auf. Im Versorgungsabschnitt 20 kann ein - nicht dargestellter - Unterdruck-Versorgungsanschluss 21, insbesondere eine werkzeuglos betätigbare Schlauchkupplung 22, ausgebildet sein. Diese sind in der Figur 10 gezeigt. Der Befestigungsabschnitt 9 ist dabei hohlzylindrisch ausgebildet und weist ein erstes Befestigungsmittel 5 in Form einer formschlüssig wirkenden Rastkupplung 8 auf. Der Außendurchmesser der Rastkupplung 8 ist dabei geringfügig kleiner oder gleich groß wie die Bohrungen 26 ausgeführt, sodass ein einfaches Montieren und Demontieren möglich ist, aber dennoch kein unerwünscht großes Spiel gegeben ist, respektive eine unvorteilhaft große Lücke entsteht. Die sechs dargestellten Unterdruck-Greiferelemente 1 werden bevorzugt in einem, bezogen auf eine Hauptachse 7 des Unterdruck-Greiferelemente 1 rechten Winkel zum plattenförmigen Tragelement 28 angeordnet.

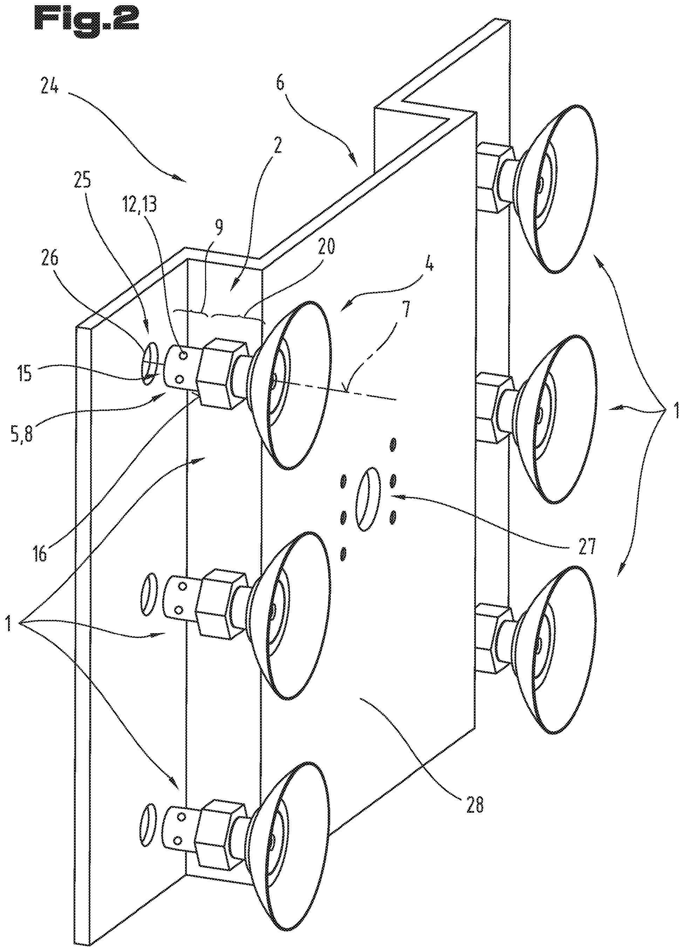

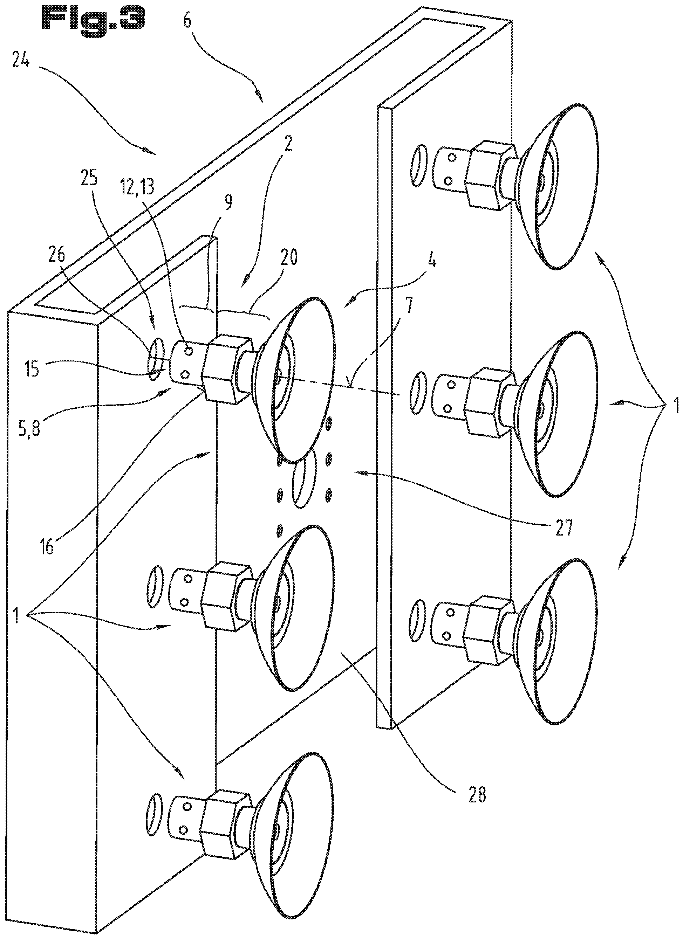

In den Figuren 2 und 3 sind zwei weitere und gegebenenfalls für sich eigenständige Ausführungsformen von Unterdruck-Greifervorrichtungen 24 gezeigt, wobei für gleiche Teile gleiche Bezugszeichen bzw. Bauteilbezeichnungen wie in der vorangegangenen Figur 1 verwendet werden. Um unnötige Wiederholungen zu vermeiden, wird an dieser Stelle auf die detaillierte Beschreibung in der vorangegangenen Figur 1 hingewiesen bzw. Bezug genommen.

Figur 2 zeigt eine dreidimensionale Explosionsansicht einer zweiten Ausführungsform einer Unterdruck-Greifervorrichtung 24 mit beispielsweise sechs Unterdruck-Greiferelementen 1 und einer Tragvorrichtung 6. Die Tragvorrichtung 6 umfasst in der dargestellten zweiten Ausführungsform der Unterdruck-Greifervorrichtung 24 ein hutschienenförmiges, plattenförmiges Tragelement 28 mit sechs Durchbrüchen 25 in der besonderen Ausbildung von einfach herzustellenden, kreisrunden Bohrungen 26.

Fig. 3 zeigt eine dreidimensionale Explosionsansicht einer dritten Ausführungsform einer Unterdruck-Greifervorrichtung 24 mit beispielsweise sechs Unterdruck-Greiferelementen 1 und einer Tragvorrichtung 6. Die Tragvorrichtung 6 umfasst in der dargestellten zweiten Ausführungsform der Unterdruck-Greifervorrichtung 24 ein C-förmiges, plattenförmiges Tragelement 28 mit sechs Durchbrüchen 25 in der besonderen Ausbildung von kreisrunden Bohrungen 26.

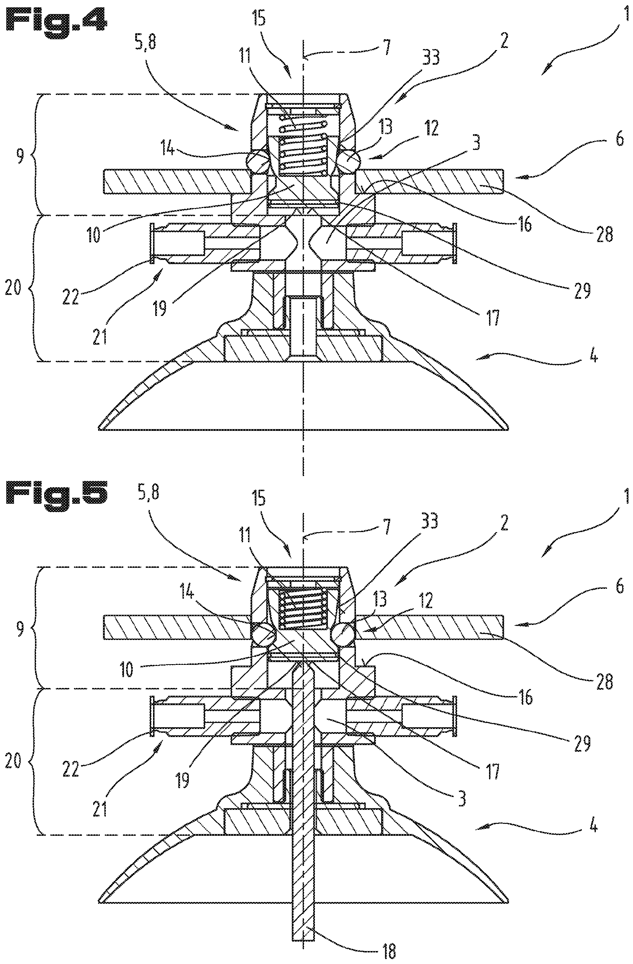

Die Figuren 4, 5, 6, 7 und 8 zeigen Längsschnitte verschiedener Ausführungsformen eines an der Tragvorrichtung 6 montierten Unterdruck-Greiferelements 1. Im folgenden Abschnitt erfolgt eine detaillierte Beschreibung des Aufbaus und der gemeinsamen baulichen Komponenten. Um unnötige Wiederholungen zu vermeiden, werden an späterer Stelle insbesondere die funktionalen bzw. baulichen Unterschiede der einzelnen Ausführungsformen hervorgehoben.

Aus diesem Grund wird nachfolgend auf diese detaillierte, allgemeine Beschreibung hingewiesen bzw. Bezug genommen.

Die Figuren 4, 5, 6, 7 und 8 zeigen Längsschnitte eines an der Tragvorrichtung 6 montierten Unterdruck-Greiferelements 1. Das Unterdruck-Greiferelement 1 ist dabei dazu ausgebildet, bei Beaufschlagung mit Unterdruck ein zu transportierendes Bauteil anzusaugen oder zu halten. Dazu besteht das Unterdruck-Greiferelement 1 aus einem im wesentlichen hohlzylindrischen Basiskörper 2, in welchem ein Unterdruck-Versorgungskanal 3 ausgebildet ist. Des Weiteren ist ein elastisches, formflexibles Dichtelement 4 ausgebildet, welches mit dem Basiskörper 2 verbunden ist und welches zur abdichtenden Anlage an einem zu transportierenden Bauteil vorgesehen ist. Zudem ist ein erstes Befestigungsmittel 5 am Basiskörper 2 ausgebildet, welches zur Befestigung des Unterdruck-Greiferelementes 1 an der Tragvorrichtung 6 ausgebildet ist. Der Basiskörper 2 und das Dichtelement 4 sind dabei entlang einer Hauptachse 7 angeordnet. Das erste Befestigungsmittel 5 ist dabei durch eine schnell und einfach aktivier- und deaktivierbare Rastkupplung 8 zum bedarfsweisen formschlüssigen Verbinden und Lösen des Unterdruck-Greiferelementes 1 gegenüber der Tragvorrichtung 6 gebildet.

Im Bereich seines freien, axialen Stirnendes 15 kann der Basiskörper 2 einen hohlzylindrischen Befestigungsabschnitt 9 aufweisen, in welchem die Rastkupplung 8 ausgebildet ist. Die Rastkupplung 8 kann ein Betätigungselement 10, ein Federelement 11 und wenigstens ein Rastelement 12 umfassen. Die Rastkupplung 8 umfasst im dargestellten Ausführungsbeispiel fünf Rastelemente 12, wobei jedoch nur zwei davon im Längsschnitt sichtbar sind. Es wird auch dargestellt, dass die Rastelemente 12 als Kugeln 13 ausgebildet sind. Diese Kugeln 13 können über den Kreisumfang des hohlzylindrischen Befestigungsabschnittes 9 gleichmäßig verteilt angeordnet sein. Alternativ ist auch eine bolzenartige Ausführung der Rastelemente 12 denkbar. Das Federelement 11 kann das Betätigungselement 10 in eine axiale Endposition drängen, wobei die Rastelemente 12 vom Betätigungselement 10 in eine Verriegelungsposition gedrängt werden können. Vorzugsweise ist das Federelement 11 als Druckfeder ausgeführt, insbesondere als Schraubenfeder ausgebildet.

Aus den Figuren 4, 5, 6, 7 und 8 geht zudem hiervor, dass die Rastelemente 12 radial zur Hauptachse 7 verstellbar gelagert sein können. Das Betätigungselement 10 kann dabei innerhalb des hohlzylindrischen Befestigungsabschnitts 9 angeordnet und entlang der Hauptachse 7 verstellbar gelagert sein. Das Betätigungselement 10 kann schieber- oder kolbenartig ausgeführt sein und an seiner äußeren Betätigungselement-Mantelfläche 33 eine zur Hauptachse 7 geneigte Kontaktfläche 14 zu den Rastelementen 12 bzw. Kugeln 13 aufweisen. Der hohlzylindrische Befestigungsabschnitt 9 kann - ausgehend von seinem axialen Stirnende 15 in Richtung zum Dichtelement 4 durch eine, vorzugsweise radial umlaufende, Anschlagfläche 16 begrenzt sein. Diese Anschlagfläche kann dabei, wie dargestellt, im montierten Zustand mit dem Tragelement 28 in direktem Kontakt stehen.

Das Betätigungselement 10 kann des Weiteren eine Betätigungsfläche 17 aufweisen, welche zur Druckbeaufschlagung ausgehend von einem baulich gesonderten stiftförmigen Betätigungswerkzeug 18 vorgesehen ist. Das stiftförmige Betätigungswerkzeug 18 ist in den Figuren 5, 7 und 8 dargestellt und wird an entsprechender Stelle detailliert beschrieben.

In dem Betätigungselement 10 kann eine den Unterdruck-Versorgungskanal 3 begrenzende Unterdruckwirkfläche 19 ausgebildet sein. Diese kann derart dimensioniert sein, dass beim Vorliegen von Unterdruck im Unterdruck-Versorgungskanal 3 das Betätigungselement 10 verstärkt in Richtung jener axialen Endposition gedrängt ist, in welcher das wenigstens eine Rastelement 12 vom Betätigungselement 10 in eine Verriegelungsposition gedrängt ist.

In Bezug auf die Hauptachse 7 kann zwischen dem hohlzylindrischen Befestigungsabschnitt 9 und dem Dichtelement 4 ein Versorgungsabschnitt 20 ausgebildet sein. Im Versorgungsabschnitt 20 kann dabei ein Unterdruck-Versorgungsanschluss 21, insbesondere eine werkzeuglos betätigbare Schlauchkupplung 22 ausgebildet sein. In den dargestellten Ausführungsbeispielen sind zwei Unterdruck-Versorgungsanschlüsse 21 ausgebildet, es sind jedoch auch andere Varianten denkbar. Diese Unterdruck-Versorgungsanschlüsse 21 sind mit dem Unterdruck-Versorgungskanal 3 strömungsverbunden. Bedarfsweise sind die Unterdruck-Versorgungsanschlüsse 21 über einen Schlauch 23 mit einer Unterdruckerzeugungsvorrichtung, insbesondere einer Vakuum-Pumpe, verbindbar. Eine Detailansicht der pneumatischen Schlauchverbindungen wird nachfolgend in der Figur 10 dargestellt und eingehend erläutert.

Die Figur 4 stellt einen Längsschnitt einer ersten Ausführungsform eines an einer Tragvorrichtung 6 montierten Unterdruck-Greiferelements 1 dar. Insbesondere ist das Unterdruck-Greiferelement 1 mit dem Tragelement 28 lösbar verbunden.

Das Federelement 11 kann - ausgehend vom freien axialen Stirnende 15 des Basiskörpers 2 in Richtung zum Dichtelement 4 - eine Kraftwirkung ausüben. So kann das Betätigungselement 10 in Richtung seiner Endposition gedrückt werden. Folglich kann es in diesem montierten Zustand zu einer Verrastung bzw. einer Klemmwirkung zwischen der Rastkupplung 8 und dem Tragelement 28 kommen. Insbesondere kommt es zu einer formschlüssigen Verrastung bzw. Klemmwirkung zwischen den Rastelementen 12 bzw. den Kugeln 13 und dem Tragelement 28. Es kann zweckmäßig sein, wenn das Betätigungselement 10, welches wie dargestellt schieber- oder kolbenartig ausgeführt sein kann, einen Dichtring 29 aufweist. Dieser Dichtring 29 kann einen luftdichten oder annähernd luftdichten Abschluss zwischen Versorgungsabschnitt 20 und Befestigungsabschnitt 9 ermöglichen. Durch einen Unterdruck im Unterdruck-Versorgungskanal 3 wird das Betätigungselement 10 über seine Unterdruckwirkfläche 19 zusätzlich zur wirkenden Federkraft in Richtung seiner verriegelnden, darstellungsgemäß unteren, Endposition gezogen.

Die Figur 5 zeigt ebenfalls einen Längsschnitt dieser ersten Ausführungsform eines Unterdruck-Greiferelements 1, jedoch in seiner entriegelten Position während der Montage oder auch während der Demontage.

Die Betätigung des Betätigungselements 10 erfolgt in der Figur 5 durch manuelle Druckbeaufschlagung auf die Betätigungsfläche 17 mittels eines gesonderten, stiftförmigen Betätigungswerkzeuges 18. Dieses wird von einem Bediener ausgehend vom Dichtelement 4 durch den Versorgungsabschnitt 20 bzw. den Unterdruck-Versorgungskanal 3 in Richtung zum freien axialen Stirnende 15 des Basiskörpers 2 geschoben. Sobald das Betätigungswerkzeug 18 die Betätigungsfläche 17 erreicht, kann der Bediener unter Aufwendung einer Betätigungskraft, die der Federkraft entspricht, das Betätigungselement 10 entgegen der Federkraft in Richtung zum freien axialen Stirnende 15 schieben. Dadurch wird das Federelement 11 komprimiert.

Der Klemmwirkung, respektive der Federkraft, kann so vorübergehend entgegengewirkt werden und die Rastelemente 12 bzw. die Kugeln 13 können sich radial zur Hauptachse 7 nach Innen bewegen. In weiterer Folge wird der Außendurchmesser der Rastkupplung 8 derart reduziert, dass dieser in den Durchbruch 25 bzw. in die Bohrung 26 des Tragelements 28 eingesetzt oder herausgeführt werden kann.

Diese erste Ausführungsform, welche in den Figuren 4 und 5 dargestellt ist, ist insbesondere bei der Montage besonders einfach handhabbar. Dies lässt sich damit begründen, dass die Kraftrichtung beim Betätigen der Betätigungsfläche 17 in Richtung der Montage- bzw. Einsteckrichtung aufgebracht wird.

In einer nicht in den Figuren dargestellten Weiterbildung ist es zusätzlich möglich, wenn im Unterdruck-Versorgungskanal 3 ein Sperrventil, insbesondere ein Rückschlagventil, ausgebildet ist, welches beim Vorliegen eines Überdruckes im Unterdruck-Versorgungskanal 3 den Unterdruck-Versorgungskanal 3 in Richtung zum Dichtelement 4 verschließt. In weiterer Folge kann das Betätigungselement 10 eine den Unterdruck-Versorgungskanal 3 begrenzende Überdruckwirkfläche aufweisen, welche derart dimensioniert ist, dass beim Vorliegen von Überdruck im Unterdruck-Versorgungskanal 3 das Betätigungselement 10 in Richtung seiner das wenigstens eine Rastelement 12 deaktivierenden Position gedrängt ist. So kann ein Loslösen des Unterdruck-Greiferelementes 1 von der Tragvorrichtung 6 automatisch erfolgen.

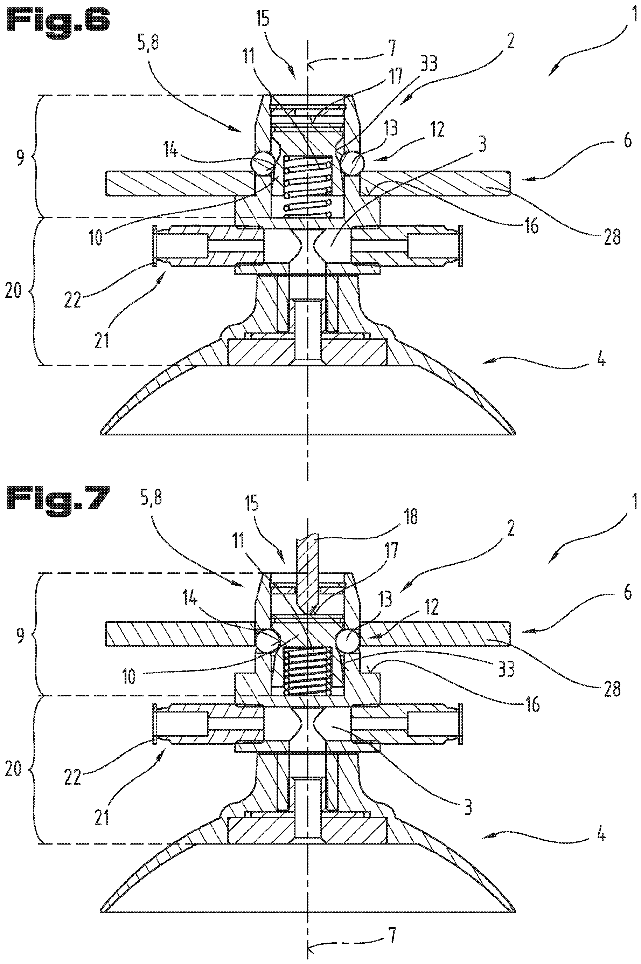

Die Figur 6 zeigt einen Längsschnitt einer zweiten Ausführungsform eines an einer Tragvorrichtung 6 montierten Unterdruck-Greiferelements 1. Insbesondere ist das Unterdruck-Greiferelement 1 mit dem Tragelement 28 lösbar verbunden.

Diese zweite Ausführungsform eines Unterdruck-Greiferelements 1 unterscheidet sich von der ersten Ausführungsform aus den Figuren 4 und 5 insofern, als eine Kraftwirkung des Druckkraft-Federelementes 11 auf das Betätigungselement 10 ausgehend vom Dichtelement 4 in Richtung zum freien axialen Stirnende 15 des Basiskörpers 2 wirkt. Dadurch wird das Betätigungselement 10 über die von dem Federelement 11 ausgehende Federkraft in Richtung seiner Endposition gezogen. Folglich kann es in diesem montierten Zustand zu einer Rast- bzw. Klemmwirkung zwischen der Rastkupplung 8 und dem Tragelement 28 kommen. Insbesondere kommt es zu einer Klemmwirkung zwischen den Rastelementen 12 bzw. den Kugeln 13 und dem Tragelement 28. Es kann zweckmäßig sein, wenn der hohlzylindrische Befestigungsabschnitt 9, wie in den Figuren 6 und 7 gezeigt, räumlich vom Versorgungsabschnitt getrennt ist und folglich auch luftdicht von diesem abgeschlossen ist.

Die Figur 7 zeigt ebenfalls einen Längsschnitt dieser zweiten Ausführungsform eines Unterdruck-Greiferelements 1, jedoch in seiner entriegelten Position während der Montage oder auch während der Demontage.

Die Betätigung des Betätigungselements 10 erfolgt in der Figur 7 durch manuelle Druckbeaufschlagung auf die Betätigungsfläche 17 mittels eines stiftförmigen Betätigungswerkzeuges 18. Dieses wird von einem Bediener ausgehend vom freien axialen Stirnende 15 durch den hohlzylindrischen Befestigungsabschnitt 9 in Richtung zum Dichtelement 4 geschoben. Sobald das Betätigungswerkzeug 18 die Betätigungsfläche 17 erreicht, kann der Bediener unter Aufwendung einer Betätigungskraft, die der Federkraft entspricht, das Betätigungselement 10 entgegen der Federkraft in Richtung zum Dichtelement 4 schieben. Dadurch wird das Federelement 11 komprimiert.

Der Klemmwirkung, respektive der Federkraft, kann so vorübergehend entgegengewirkt werden und die Rastelemente 12 bzw. die Kugeln 13 können sich radial zur Hauptachse 7 nach Innen bewegen. In weiterer Folge wird der Außendurchmesser der Rastkupplung 8 derart reduziert, dass dieser in den Durchbruch 25 bzw. in die Bohrung 26 des Tragelements 28 eingesetzt oder herausgeführt werden kann.

Diese zweite Ausführungsform, welche in den Figuren 6 und 7 dargestellt ist, ist insbesondere bei der Demontage besonders einfach handhabbar. Dies lässt sich damit begründen, dass die Kraftrichtung beim Betätigen der Betätigungsfläche 17 in Richtung der Demontage bzw. in Richtung der Entkoppelungsrichtung des Unterdruck-Greiferelements 1 aufgebracht wird.

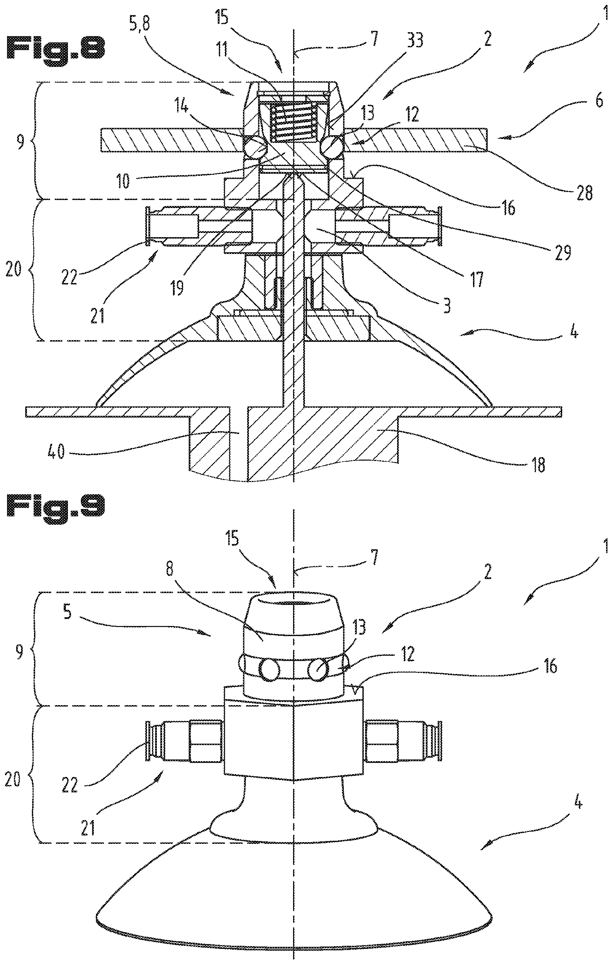

In der Figur 8 ist ein Längsschnitt einer dritten Ausführungsform eines an einer Tragvorrichtung 6 montierten Unterdruck-Greiferelements 1 mit Betätigungswerkzeug 18 dargestellt. Diese dritte Ausführungsform stellt eine Variante zur ersten Ausführungsform in den Figuren 4 und 5 dar.

In der Darstellung der Figur 8 übt das Betätigungswerkzeug 18 auf die Betätigungsfläche 17 des Betätigungselementes 10 eine Kraft aus. Dies ist dadurch erkennbar, dass das Federelement 11 komprimiert ist und sich die Rastelemente 12 radial zur Hauptachse 7 nach Innen bewegt haben.

Die Druckbeaufschlagung der Betätigungsfläche 17 des Betätigungselementes 10 funktioniert grundsätzlich wie in der Figur 5 beschrieben. Die Betätigung des Betätigungselements 10 erfolgt jedoch in dieser dritten Ausführungsform durch automatisierte Druckbeaufschlagung auf die Betätigungsfläche 17 mittels eines roboterbewegten, stiftförmigen Betätigungswerkzeuges 18.

Das roboterbewegte, stiftförmige Betätigungswerkzeug 18 wird ausgehend vom Dichtelement 4 durch den Versorgungsabschnitt 20 bzw. den Unterdruck-Versorgungskanal 3 in Richtung zum freien axialen Stirnende 15 des Basiskörpers 2 geschoben. Sobald das Betätigungswerkzeug 18 die Betätigungsfläche 17 erreicht, kann der Roboter unter Aufwendung einer Kraft, die der Federkraft entspricht, das Betätigungselement 10 entgegen der Federkraft in Richtung zum freien axialen Stirnende 15 schieben. Dadurch wird das Federelement 11 komprimiert.

Der Klemmwirkung, respektive der Federkraft, kann so vorübergehend entgegengewirkt werden und die Rastelemente 12 bzw. die Kugeln 13 können sich radial zur Hauptachse 7 nach Innen bewegen. In weiterer Folge wird der Außendurchmesser der Rastkupplung 8 derart reduziert, dass dieser in den Durchbruch 25 bzw. in die Bohrung 26 des Tragelements 28 eingesetzt oder herausgeführt werden kann.

Gemäß dieser dritten Ausführungsform wird zusätzlich zu dem stiftförmigen Abschnitt des Betätigungswerkzeuges 18 zur Betätigung der Betätigungsfläche 17 ein plattenförmiger und ebener Abschnitt auf das Dichtelement 4 aufgebracht. Durch die Kraftwirkung in Richtung zum freien axialen Stirnende 15, liegt der ebene Abschnitt auf dem formflexiblen Dichtelement 4 auf bzw. drückt der ebene Abschnitt auf das formflexible Dichtelement 4. Der plattenförmige und ebene Abschnitt des Betätigungswerkzeuges 18 kann mit einer Unterdruck-Versorgungsleitung 40 ausgebildet sein, über welche Unterdruck-Versorgungsleitung 40 ein Unterdruck im Dichtelement 4 anlegbar ist. Bedarfsweise kann die Unterdruck-Versorgungsleitung 40 mit einer Unterdruckerzeugungsvorrichtung, insbesondere einer Vakuum-Pumpe, verbindbar sein. Damit zwischen Dichtelement 4 und dem plattenförmige und ebene Abschnitt des stiftförmigen Betätigungswerkzeuges 18 ein Unterdruck bestehen kann, kann es vorteilhaft sein, wenn der stiftförmige Bereich des stiftförmigen Betätigungswerkzeuges zur Abdichtung des Unterdruck-Versorgungskanals 3 im Basiskörper 2 ausgebildet ist. Diese Abdichtwirkung kann beispielsweise mittels einer Dichtung am Stiftmantel erzielt werden.

Anstelle der Ausbildung wenigstens einer Druckfeder als Federelement 11 ist es selbstverständlich auch möglich, wenigstens eine Zugfeder vorzusehen. Die jeweiligen Kraftrichtungen gegenüber dem Betätigungselement 10 bzw. gegenüber dem wenigstens einen Rastelement 12 sind lediglich entsprechend anzupassen.

Diese dritte Ausführungsform, welche in der Figur 8 dargestellt ist, ist insbesondere bei der Montage, aber auch bei der Demontage einfach handhabbar.

Für ein verbessertes Verständnis der zuvor beschriebenen Ausführungsformen zeigt die Figur 9 eine dreidimensionale Ansicht einer vierten Ausführungsform eines Unterdruck-Greiferelementes 1. Das Unterdruck-Greiferelement 1 umfasst dabei einen Basiskörper 2 und ein elastisches, formflexibles Dichtelement 4. Ein erstes Befestigungsmittel 5 am Basiskörper 2 ist zu Befestigung des Unterdruck-Greiferelements 1 an der Tragvorrichtung 6 ausgebildet, wobei die vorzugsweise lediglich plattenartig ausgebildete, aus einem Blechstück gefertigte, Tragvorrichtung 6 in der Figur 9 nicht dargestellt ist. Der Basiskörper 2 und das Dichtelement 4 sind entlang einer Hauptachse 7 angeordnet. Das erste Befestigungsmittel 5 ist durch eine Rastkupplung 8 gebildet.

Insbesondere kann der Basiskörper 2 einen hohlzylindrischen Befestigungsabschnitt 9 aufweisen. Die Rastkupplung 8 kann Rastelemente 12 in der besonderen Ausbildung als Kugeln 13 umfassen. Sichtbar sind vier der um den Kreisumfang des hohlzylindrischen Befestigungsabschnittes 9 verteilt angeordnete Kugeln 13. Der hohlzylindrische Befestigungsabschnitt 9 kann - ausgehend von seinem axialen Stirnende 15 in Richtung zum Dichtelement 4 durch eine Anschlagfläche 16 begrenzt sein. In Bezug auf die Hauptachse 7 kann zwischen dem hohlzylindrischen Befestigungsabschnitt 9 und dem Dichtelement 4 ein Versorgungsabschnitt 20 ausgebildet sein. Die Figur 9 zeigt auch, dass im Versorgungsabschnitt 20 ein Unterdruck-Versorgungsanschluss 21, insbesondere eine werkzeuglos betätigbare Schlauchkupplung 22, ausgebildet sein kann. Insbesondere sind zwei einander gegenüberliegende Unterdruck-Versorgungsanschlüsse 21 ausgebildet.

Figur 10 zeigt eine dreidimensionale Detailansicht einer vierten Ausführungsform einer Unterdruck-Greifervorrichtung 24 mit einem Unterdruck-Greiferelement 1 mit pneumatischen Anschlüssen und einer Tragvorrichtung 6. Das Unterdruck-Greiferelement 1 ist dabei mit der Tragvorrichtung lösbar verbunden.

Zur Beschreibung der Figur 10 werden für gleiche Teile gleiche Bezugszeichen bzw. Bauteilbezeichnungen wie in der vorangegangenen Figur 1 verwendet. Um unnötige Wiederholungen zu vermeiden, wird an dieser Stelle auf die detaillierte Beschreibung in der vorangegangenen Figur 1 hingewiesen bzw. Bezug genommen. Zusätzlich zur Figur 1 zeigt die Figur 10 eine denkbare Anordnung der pneumatischen Schlauchleitungen. Ein Unterdruck-Versorgungsanschluss 21 ist durch eine werkzeuglos betätigbare Schlauchkupplung 22 gebildet und mit dem Unterdruck-Versorgungskanal 3 strömungsverbunden. Des Weiteren ist der Unterdruck-Versorgungsanschluss 21 über einen Schlauch 23, insbesondere einen Pneumatik-Schlauch, mit einer Unterdruckerzeugungsvorrichtung bzw. einem elektropneumatischen Ventil bedarfsweise verbindbar.

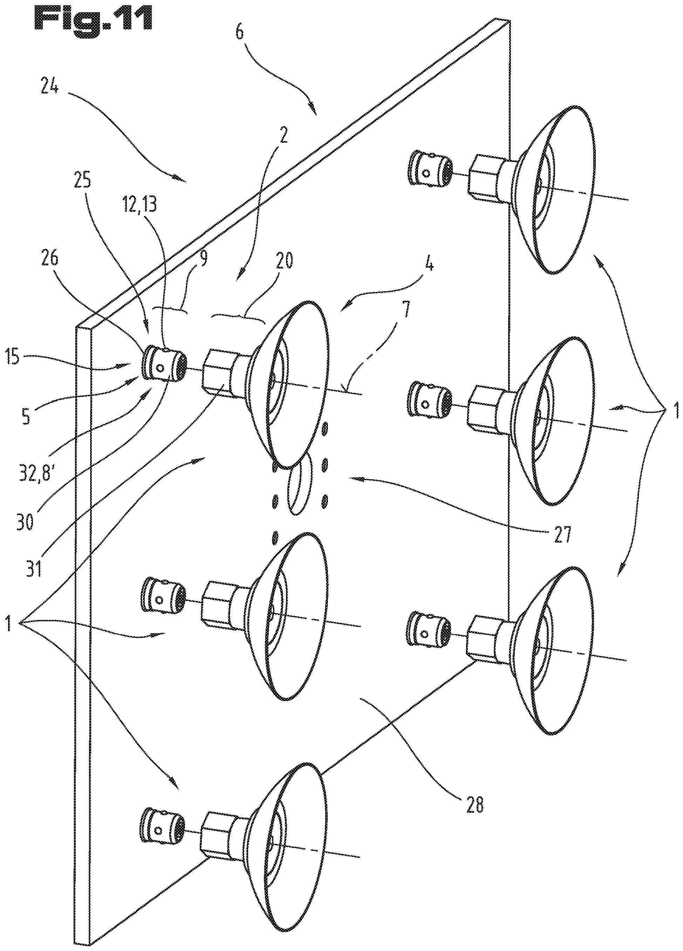

In der Figur 11 ist eine weitere und gegebenenfalls für sich eigenständige Ausführungsform einer Unterdruck-Greifervorrichtungen 24 gezeigt, wobei für gleiche Teile gleiche Bezugszeichen bzw. Bauteilbezeichnungen wie in der vorangegangenen Figur 1 verwendet werden. Um unnötige Wiederholungen zu vermeiden, wird an dieser Stelle auf die detaillierte Beschreibung in der vorangegangenen Figur 1 hingewiesen bzw. Bezug genommen.

Figur 11 zeigt eine dreidimensionale Explosionsansicht einer fünften Ausführungsform einer Unterdruck-Greifervorrichtung 24 mit beispielsweise sechs Unterdruck-Greiferelementen 1 und einer Tragvorrichtung 6. Die Tragvorrichtung 6 umfasst in der dargestellten fünften Ausführungsform der Unterdruck-Greifervorrichtung 24 ein ebenes, plattenförmiges Tragelement 28 mit sechs Durchbrüchen 25 in der besonderen Ausbildung von einfach herzustellenden, kreisrunden Bohrungen 26.

Die sechs in der Figur 11 dargestellten, baugleichen Unterdruck-Greiferelemente 1 bestehen gemäß dem Ausführungsbeispiel im Wesentlichen aus einem ersten Basiskörperteil 30, einem zweiten Basiskörperteil 31 und einem Dichtelement 4. Bei dem Dichtelement 4 handelt es sich um eine formflexible, elastische Saugglocke aus Kunststoff. Das erste Basiskörperteil 30 ist mittels dem ersten Befestigungsmittel 5 formschlüssig mit der Tragvorrichtung 6 verbunden. Das zweite Basiskörperteil 31 ist mit dem Dichtelement 4 verbunden. Der skizzierte Basiskörper 2 weist einen Befestigungsabschnitt 9 und einen Versorgungsabschnitt 20 auf. Ein zweites Befestigungsmittel 32 zum bedarfsweisen formschlüssigen Verbinden und Lösen des ersten Basiskörperteils 30 gegenüber dem zweiten Basiskörperteil 31 ist durch eine Rastkupplung 8' gebildet. Der Befestigungsabschnitt 9 ist dabei hohlzylindrisch ausgebildet. Der Außendurchmesser des ersten Basiskörperteils 30 ist dabei geringfügig kleiner oder gleich groß wie die Bohrungen 26 ausgeführt, sodass ein einfaches Montieren und Demontieren möglich ist, aber dennoch kein unerwünscht großes Spiel gegeben ist, respektive eine unvorteilhaft große Lücke entsteht. Die sechs dargestellten Unterdruck-Greiferelemente 1 werden bevorzugt in einem, bezogen auf eine Hauptachse 7 des Unterdruck-Greiferelemente 1 rechten Winkel zum plattenförmigen Tragelement 28 angeordnet.

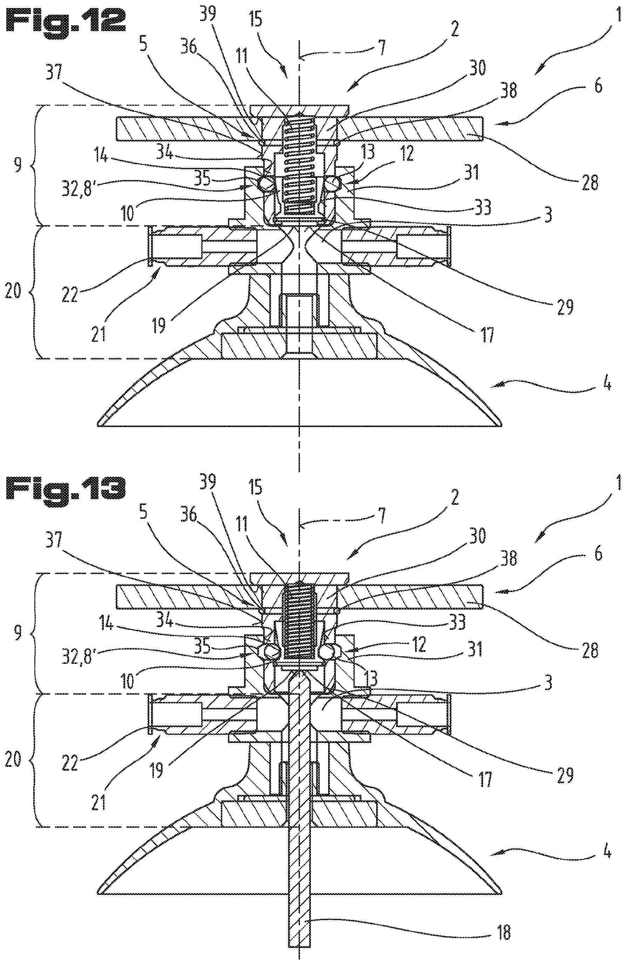

Die Figuren 12, 13, 14 und 15 zeigen Längsschnitte zweier weiterer Ausführungsformen eines an der Tragvorrichtung 6 montierten Unterdruck-Greiferelements 1. Im folgenden Abschnitt erfolgt eine detaillierte Beschreibung des Aufbaus und der gemeinsamen baulichen Komponenten. Um unnötige Wiederholungen zu vermeiden, werden an späterer Stelle insbesondere die funktionalen bzw. baulichen Unterschiede der einzelnen Ausführungsformen hervorgehoben. Aus diesem Grund wird nachfolgend auf diese detaillierte, allgemeine Beschreibung hingewiesen bzw. Bezug genommen.

Die Figuren 12, 13, 14 und 15 zeigen Längsschnitte eines an der Tragvorrichtung 6 montierten Unterdruck-Greiferelements 1. Das Unterdruck-Greiferelement 1 ist dabei dazu ausgebildet, bei Beaufschlagung mit Unterdruck ein zu transportierendes Bauteil anzusaugen oder zu halten. Dazu besteht das Unterdruck-Greiferelement 1 aus einem im wesentlichen hohlzylindrischen Basiskörper 2, welcher ein erstes Basiskörperteil 30 und ein zweites Basiskörperteil 31 umfasst und in welchem ein Unterdruck-Versorgungskanal 3 ausgebildet ist. Des Weiteren ist ein elastisches, formflexibles Dichtelement 4 ausgebildet, welches mit dem zweiten Basiskörperteil 31 verbunden ist und welches zur abdichtenden Anlage an einem zu transportierenden Bauteil vorgesehen ist. Zudem ist ein erstes Befestigungsmittel 5 ausgebildet, welches zum bedarfsweisen formschlüssigen Verbinden und Lösen des ersten Basiskörperteils 30 an der Tragvorrichtung 6 ausgebildet ist. Der Basiskörper 2 und das Dichtelement 4 sind dabei entlang einer Hauptachse 7 angeordnet. Ein zweites Befestigungsmittel 32 ist durch eine schnell und einfach aktivier- und deaktivierbare Rastkupplung 8' zum bedarfsweisen formschlüssigen Verbinden und Lösen des ersten Basiskörperteils 30 gegenüber dem zweiten Basiskörperteil 31 gebildet.

Im Bereich seines freien, axialen Stirnendes 15 kann der Basiskörper 2 einen hohlzylindrischen Befestigungsabschnitt 9 aufweisen, in welchem die Rastkupplung 8' ausgebildet ist. Die Rastkupplung 8' kann ein Betätigungselement 10, ein Federelement 11 und wenigstens ein Rastelement 12 umfassen. Die Rastkupplung 8' umfasst im dargestellten Ausführungsbeispiel fünf Rastelemente 12, wobei jedoch nur zwei davon im Längsschnitt sichtbar sind. Es wird auch dargestellt, dass die Rastelemente 12 als Kugeln 13 ausgebildet sind. Diese Kugeln 13 können über den Kreisumfang des hohlzylindrischen Befestigungsabschnittes 9 gleichmäßig verteilt angeordnet sein. Alternativ ist beispielsweise auch eine bolzenartige Ausführung der Rastelemente 12 denkbar. Das Federelement 11 kann das Betätigungselement 10 in eine axiale Endposition drängen, wobei die Rastelemente 12 vom Betätigungselement 10 in eine Verriegelungsposition gedrängt werden können. Vorzugsweise ist das Federelement 11 als Druckfeder ausgeführt, insbesondere als Schraubenfeder ausgebildet.

Aus den Figuren 12, 13, 14 und 15 geht zudem hiervor, dass die Rastelemente 12 radial zur Hauptachse 7 verstellbar gelagert sein können. Das Betätigungselement 10 kann dabei innerhalb des hohlzylindrischen Befestigungsabschnitts 9 angeordnet und entlang der Hauptachse 7 verstellbar gelagert sein. Das Betätigungselement 10 kann schieber- oder kolbenartig ausgeführt sein und an seiner äußeren Betätigungselement-Mantelfläche 33 eine zur Hauptachse 7 geneigte Kontaktfläche 14 zu den Rastelementen 12 bzw. Kugeln 13 aufweisen. An der inneren Mantelfläche 34 des zweiten Basiskörperteils 31 kann eine ringnutförmige Innenmantel-Einkerbung 35 zur Aufnahme des wenigstens einen Rastelementes 12 ausgebildet sein.

Das Betätigungselement 10 kann des Weiteren eine Betätigungsfläche 17 aufweisen, welche zur Druckbeaufschlagung ausgehend von einem baulich gesonderten stiftförmigen Betätigungswerkzeug 18 vorgesehen ist. Das stiftförmige Betätigungswerkzeug 18 ist in der Figur 13 dargestellt und wird an entsprechender Stelle detailliert beschrieben.

In dem Betätigungselement 10 kann eine den Unterdruck-Versorgungskanal 3 begrenzende Unterdruckwirkfläche 19 ausgebildet sein. Diese kann derart dimensioniert sein, dass beim Vorliegen von Unterdruck im Unterdruck-Versorgungskanal 3 das Betätigungselement 10 verstärkt in Richtung jener axialen Endposition gedrängt ist, in welcher das wenigstens eine Rastelement 12 vom Betätigungselement 10 in eine Verriegelungsposition gedrängt ist.

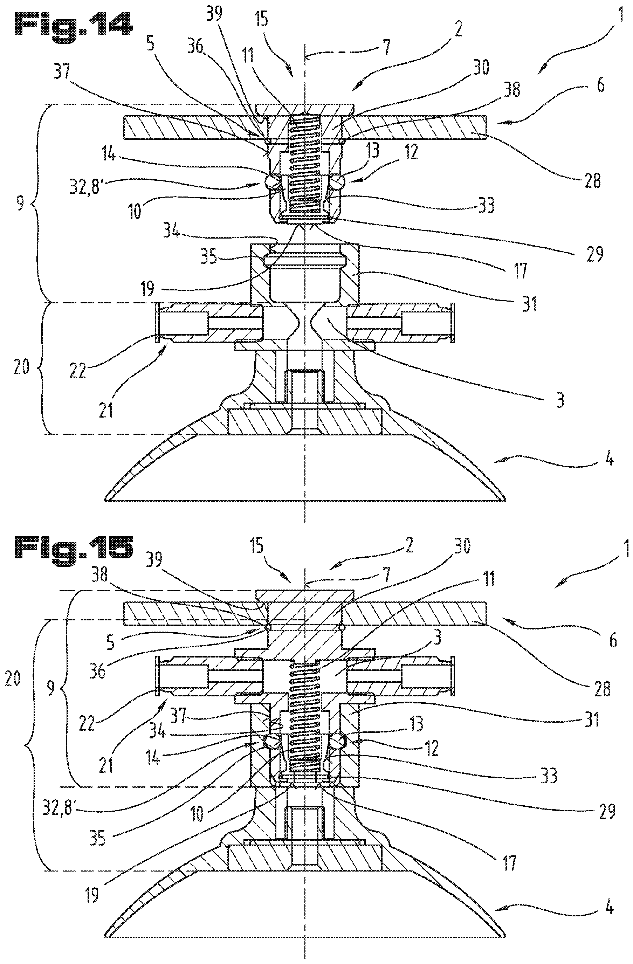

In Bezug auf die Hauptachse 7 kann zwischen dem hohlzylindrischen Befestigungsabschnitt 9 und dem Dichtelement 4 ein Versorgungsabschnitt 20 ausgebildet sein. Der Versorgungsabschnitt 20 kann dabei wie in den Figuren 12, 13 und 14 dargestellt, zum Versorgen des Unterdruck-Greiferelementes 1 mit Unterdruck am zweiten Basiskörperteil 31 ausgebildet sein. Alternativ kann der Versorgungsabschnitt 20, wie in der Figur 15 gezeigt ist, zum Versorgen des Unterdruck-Greiferelementes 1 mit Unterdruck am ersten Basiskörperteil 30 ausgebildet sein. Im Versorgungsabschnitt 20 kann dabei ein Unterdruck-Versorgungsanschluss 21, insbesondere eine werkzeuglos betätigbare Schlauchkupplung 22 ausgebildet sein. In den dargestellten Ausführungsbeispielen sind zwei Unterdruck-Versorgungsanschlüsse 21 ausgebildet, es sind jedoch auch andere Varianten denkbar. Diese Unterdruck-Versorgungsanschlüsse 21 sind mit dem Unterdruck-Versorgungskanal 3 strömungsverbunden. Bedarfsweise sind die Unterdruck-Versorgungsanschlüsse 21 über einen Schlauch 23 mit einer Unterdruckerzeugungsvorrichtung, insbesondere einer Vakuum-Pumpe, verbindbar. Eine Detailansicht der pneumatischen Schlauchverbindungen ist in der Figur 10 dargestellt.

Es kann zweckmäßig sein, wenn der Unterdruck-Versorgungskanal 3 nach dem formschlüssigen Verbinden des ersten Basiskörperteils 30 gegenüber dem zweiten Basiskörperteil 31 mittels der Rastkupplung 8' strömungsdicht ausgebildet ist. Das erste Befestigungsmittel 5 kann durch einen in einer ringnutförmigen Außenmantel-Einkerbung 36 an der äußeren Mantelfläche 37 des ersten Basiskörperteils 30 angeordneten Federring 38 gebildet sein. Alternativ oder zusätzlich, jedoch nicht in den Figuren dargestellt, kann das erste Befestigungsmittel 5 auch durch ein an der äußeren Mantelfläche 37 des ersten Basiskörperteils 30 angeordnetes Gewinde gebildet sein. Des Weiteren kann die Stabilität der Befestigung verbessert werden, wenn der erste Basiskörperteil 30 ausgehend vom Dichtelement 4 in Richtung zu einem axialen Stirnende 15 durch wenigstens eine Flanschfläche 39 begrenzt ist.

Die Figur 12 stellt einen Längsschnitt einer fünften Ausführungsform eines an einer Tragvorrichtung 6 montierten Unterdruck-Greiferelements 1 dar. Insbesondere ist das Unterdruck-Greiferelement 1, genauer das erste Basiskörperteil 30, mit dem Tragelement 28 lösbar verbunden.

Das Federelement 11 kann - ausgehend vom freien axialen Stirnende 15 des Basiskörpers 2 in Richtung zum Dichtelement 4 - eine Kraftwirkung ausüben. So kann das Betätigungselement 10 in Richtung seiner Endposition gedrückt werden. Folglich kann es in diesem montierten Zustand zu einer Verrastung bzw. einer Klemmwirkung zwischen der Rastkupplung 8' und dem zweiten Basiskörperteil 31 kommen. Insbesondere kommt es zu einer formschlüssigen Verrastung bzw. Klemmwirkung zwischen den Rastelementen 12 bzw. den Kugeln 13 und dem zweiten Basiskörperteil 31. Die Rastelemente 12 bzw. die Kugeln 13 finden dabei Aufnahme in der ringnutförmigen Innenmantel-Einkerbung 35 an der inneren Mantelfläche 34. Es kann zweckmäßig sein, wenn das Betätigungselement 10, welches wie dargestellt schieber- oder kolbenartig ausgeführt sein kann, einen Dichtring 29 aufweist. Dieser Dichtring 29 kann einen luftdichten oder annähernd luftdichten Abschluss zwischen Versorgungsabschnitt 20 und Befestigungsabschnitt 9 ermöglichen. Durch einen Unterdruck im Unterdruck-Versorgungskanal 3 wird das Betätigungselement 10 über seine Unterdruckwirkfläche 19 zusätzlich zur wirkenden Federkraft in Richtung seiner verriegelnden, darstellungsgemäß unteren, Endposition gezogen.

Die Figur 13 zeigt ebenfalls einen Längsschnitt dieser fünften Ausführungsform eines Unterdruck-Greiferelements 1, jedoch in seiner entriegelten Position während der Montage oder auch während der Demontage des zweiten Basiskörperteils 31 vom ersten Basiskörperteil 30.

Die Betätigung des Betätigungselements 10 erfolgt in der Figur 13 durch manuelle Druckbeaufschlagung auf die Betätigungsfläche 17 mittels eines gesonderten, stiftförmigen Betätigungswerkzeuges 18. Dieses wird von einem Bediener ausgehend vom Dichtelement 4 durch den Versorgungsabschnitt 20 bzw. den Unterdruck-Versorgungskanal 3 in Richtung zum freien axialen Stirnende 15 des Basiskörpers 2 geschoben. Sobald das Betätigungswerkzeug 18 die Betätigungsfläche 17 erreicht, kann der Bediener unter Aufwendung einer Betätigungskraft, die der Federkraft entspricht, das Betätigungselement 10 entgegen der Federkraft in Richtung zum freien axialen Stirnende 15 schieben. Dadurch wird das Federelement 11 komprimiert.

Der Klemmwirkung, respektive der Federkraft, kann so vorübergehend entgegengewirkt werden und die Rastelemente 12 bzw. die Kugeln 13 können sich radial zur Hauptachse 7 nach Innen bewegen. In weiterer Folge wird der Außendurchmesser der Rastkupplung 8' derart reduziert, dass ein Loslösen des zweiten Basiskörperteils 31 vom ersten Basiskörperteil 30 möglich ist.

Die Figur 14 zeigt ebenfalls einen Längsschnitt dieser fünften Ausführungsform eines Unterdruck-Greiferelements 1, vor der Montage oder nach der Demontage. Insbesondere ist der zweite Basiskörperteil 31 vom ersten Basiskörperteil 30 losgelöst.

Die Figur 15 stellt einen Längsschnitt einer sechsten Ausführungsform eines an einer Tragvorrichtung 6 montierten Unterdruck-Greiferelements 1 dar. Insbesondere ist das Unterdruck-Greiferelement 1, genauer das erste Basiskörperteil 30, mit dem Tragelement 28 lösbar verbunden.

In Bezug auf die Hauptachse 7 kann zwischen dem hohlzylindrischen Befestigungsabschnitt 9 und dem Dichtelement 4 ein Versorgungsabschnitt 20 ausgebildet sein. Der Versorgungsabschnitt 20 kann zum Versorgen des Unterdruck-Greiferelementes 1 mit Unterdruck am ersten Basiskörperteil 30 ausgebildet sein. Über einen, beispielsweise kreisrunden, Durchgang im Betätigungselement, kann sich der Unterdruck zwischen Unterdruck-Versorgungskanal 3 und Dichtelement 4 ausbreiten. Ein stiftförmiges Betätigungswerkzeug 18 kann zur effizienten Betätigung der Betätigungsfläche 17 an die Geometrie der Betätigungsfläche 17 angepasst werden.

Zum Montieren und/oder zum Demontieren des ersten Basiskörperteils 30 gegenüber der Tragvorrichtung 6 kann es zweckmäßig sein, wenn der Durchbruch 25 eine Kontur aufweist, die derart geformt ist, dass das erste Basiskörperteil 30 einsetzbar ist. Weiters kann die Flanschfläche 39 durch eine Mutter gebildet sein, welche auf das erste Basiskörperteil 30 aufschraubbar ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Unterdruck-Greiferelement | 30 | erstes Basiskörperteil |
| 2 | Basiskörper | 31 | zweites Basiskörperteil |
| 3 | Unterdruck-Versorgungskanal | 32 | zweites Befestigungsmittel |
| 4 | Dichtelement | 33 | Betätigungselement-Mantelfläche |
| 5 | rstes Befestigungsmittel | 34 | innere Mantelfläche |
| 6 | Tragvorrichtung | 35 | ringnutförmige Innenmantel-Einkerbung |
| 7 | Hauptachse | | |
| 8, 8' | Rastkupplung | 36 | ringnutförmige Außenmantel-Einkerbung |
| 9 | hohlzylindrischer Befestigungsabschnitt | | |
| | | 37 | äußere Mantelfläche |
| 10 | Betätigungselement | 38 | Federring |
| 11 | Federelement | 39 | Flanschfläche |
| 12 | Rastelement | 40 | Unterdruck-Versorgungsleitung |
| 13 | Kugel | | |
| 14 | Kontaktfläche | | |
| 15 | freies, axiales Stirnende | | |
| 16 | Anschlagfläche | | |
| 17 | Betätigungsfläche | | |
| 18 | stiftförmiges Betätigungswerkzeug | | |
| 19 | Unterdruckwirkfläche | | |
| 20 | Versorgungsabschnitt | | |
| 21 | Unterdruck-Versorgungsanschluss | | |
| 22 | Schlauchkupplung | | |
| 23 | Schlauch | | |
| 24 | Unterdruck-Greifervorrichtung | | |
| 25 | Durchbruch | | |
| 26 | Bohrung | | |
| 27 | Kupplung smittel | | |
| 28 | Tragelement | | |
| 29 | Dichtring | | |

## Patentansprüche

1. Unterdruck-Greiferelement (1), welches dazu ausgebildet ist, bei Beaufschlagung mit Unterdruck ein zu transportierendes Bauteil anzusaugen oder zu halten, umfassend
- einen Basiskörper (2) mit wenigstens einem Unterdruck-Versorgungskanal (3),
- ein elastisches, formflexibles Dichtelement (4), welches mit dem Basiskörper (2) verbunden ist und zur abdichtenden Anlage an dem zu transportierenden Bauteil vorgesehen ist,
- ein erstes Befestigungsmittel (5) am Basiskörper (2) zur Befestigung des Unterdruck-Greiferelementes (1) an einer Tragvorrichtung (6), wobei
der Basiskörper (2) und das Dichtelement (4) entlang einer Hauptachse (7) des Unterdruck-Greiferelementes (1) angeordnet sind,
wobei das erste Befestigungsmittel (5) durch eine Rastkupplung (8) zum bedarfsweisen formschlüssigen Verbinden und Lösen des Unterdruck-Greiferelementes (1) gegenüber der Tragvorrichtung (6) gebildet ist,
oder der Basiskörper (2) ein erstes Basiskörperteil (30) und ein zweites Basiskörperteil (31) umfasst, welches erste Basiskörperteil (30) mittels dem ersten Befestigungsmittel (5) zum bedarfsweisen formschlüssigen Verbinden und Lösen gegenüber der Tragvorrichtung (6) vorgesehen ist, und welches zweite Basiskörperteil (31) mit dem elastischen, formflexiblen Dichtelement (4) verbunden ist, und ein zweites Befestigungsmittel (32) zum bedarfsweisen formschlüssigen Verbinden und Lösen des ersten Basiskörperteils (30) gegenüber dem zweiten Basiskörperteil (31) durch eine Rastkupplung (8') gebildet ist, und
wobei der Basiskörper (2) einen hohlzylindrischen Befestigungsabschnitt (9) aufweist, in welchem die Rastkupplung (8, 8') ausgebildet ist, und
wobei die Rastkupplung (8, 8') ein Betätigungselement (10), ein Federelement (11) und wenigstens ein Rastelement (12) umfasst, wobei das Federelement (11) das Betätigungselement (10) in eine Endposition drängt, und wobei das wenigstens eine Rastelement (12) vom Betätigungselement (10) in eine Verriegelungsposition gedrängt ist,
wobei das Betätigungselement (10) innerhalb des hohlzylindrischen Befestigungsabschnitts (9) angeordnet ist und entlang der Hauptachse (7) verstellbar gelagert ist, und
wobei das Betätigungselement (10) eine Betätigungsfläche (17) aufweist, welche zur Druckbeaufschlagung ausgehend von einem baulich gesonderten, stiftförmigen Betätigungswerkzeug (18) vorgesehen ist.

2. Unterdruck-Greiferelement (1) nach Anspruch 1, **dadurch gekennzeichnet, dass** das zumindest eine Rastelement (12) radial zur Hauptachse (7) verstellbar gelagert ist.

3. Unterdruck-Greiferelement (1) nach einem der Ansprüche 1 oder 2, **dadurch gekennzeichnet, dass** das zumindest eine Rastelement (12) als Kugel (13) ausgebildet ist, insbesondere durch zumindest drei, vorzugsweise fünf, über den Kreisumfang des hohlzylindrischen Befestigungsabschnittes (9) verteilt angeordnete Kugeln (13) gebildet ist.

4. Unterdruck-Greiferelement (1) nach einem der vorhergehenden Ansprüche, **dadurch gekennzeichnet, dass** das Betätigungselement (10) schieber- oder kolbenartig ausgeführt ist und an seiner äußeren Betätigungselement-Mantelfläche (33) wenigstens eine zur Hauptachse (7) geneigte Kontaktfläche (14) zu dem wenigstens einen Rastelement (12) aufweist.

5. Unterdruck-Greiferelement (1) nach einem der vorhergehenden Ansprüche, **dadurch gekennzeichnet, dass** an einer inneren Mantelfläche (34) des zweiten Basiskörperteils (31) eine ringnutförmige Innenmantel-Einkerbung (35) zur Aufnahme des wenigstens einen Rastelementes (12) ausgebildet ist.

6. Unterdruck-Greiferelement (1) nach einem der vorhergehenden Ansprüche, **dadurch gekennzeichnet, dass** der hohlzylindrische Befestigungsabschnitt (9) ausgehend von einem axialen Stirnende (15) in Richtung zum Dichtelement (4) durch wenigstens eine Anschlagfläche (16) begrenzt ist.

7. Unterdruck-Greiferelement (1) nach einem der vorhergehenden Ansprüche, **dadurch gekennzeichnet, dass** eine Kraftwirkung des Federelementes (11) auf das Betätigungselement (10) ausgehend von einem freien axialen Stirnende (15) des Basiskörpers (2) in Richtung zum Dichtelement (4) wirkt.

8. Unterdruck-Greiferelement (1) nach einem der vorhergehenden Ansprüche, **dadurch gekennzeichnet, dass** eine Kraftwirkung des Federelementes (11) auf das Betätigungselement (10) ausgehend vom Dichtelement (4) in Richtung zu einem freien axialen Stirnende (15) des Basiskörpers (2) wirkt.

9. Unterdruck-Greiferelement (1) nach einem der vorhergehenden Ansprüche, **dadurch gekennzeichnet, dass** das Betätigungselement (10) eine den Unterdruck-Versorgungskanal (3) begrenzende Unterdruckwirkfläche (19) aufweist, welche Unterdruckwirkfläche (19) derart dimensioniert ist, dass beim Vorliegen von Unterdruck im Unterdruck-Versorgungskanal (3) das Betätigungselement (10) verstärkt in Richtung jener axialen Endposition gedrängt ist, in welcher das wenigstens eine Rastelement (12) vom Betätigungselement (10) in eine Verriegelungsposition gedrängt ist.

10. Unterdruck-Greiferelement (1) nach einem der vorhergehenden Ansprüche, **dadurch gekennzeichnet, dass** im Unterdruck-Versorgungskanal (3) ein Sperrventil, insbesondere ein Rückschlagventil, ausgebildet ist, welches beim Vorliegen eines Überdruckes im Unterdruck-Versorgungskanal (3) den Unterdruck-Versorgungskanal (3) in Richtung zum Dichtelement (4) verschließt.

11. Unterdruck-Greiferelement (1) nach Anspruch 10, **dadurch gekennzeichnet, dass** das Betätigungselement (10) eine den Unterdruck-Versorgungskanal (3) begrenzende Überdruckwirkfläche aufweist, welche Überdruckwirkfläche derart dimensioniert ist, dass beim Vorliegen von Überdruck im Unterdruck-Versorgungskanal (3) das Betätigungselement (10) in Richtung seiner das wenigstens eine Rastelement (12) deaktivierenden Position gedrängt ist.

12. Unterdruck-Greiferelement (1) nach einem der vorhergehenden Ansprüche, **dadurch gekennzeichnet, dass** in Bezug auf die Hauptachse (7) zwischen dem hohlzylindrischen Befestigungsabschnitt (9) und dem Dichtelement (4) ein Versorgungsabschnitt (20) ausgebildet ist.

13. Unterdruck-Greiferelement (1) nach Anspruch 12, **dadurch gekennzeichnet, dass** der Versorgungsabschnitt (20) zum Versorgen des Unterdruck-Greiferelementes (1) mit Unterdruck am ersten Basiskörperteil (30) ausgebildet ist.

14. Unterdruck-Greiferelement (1) nach Anspruch 12, **dadurch gekennzeichnet, dass** der Versorgungsabschnitt (20) zum Versorgen des Unterdruck-Greiferelementes (1) mit Unterdruck am zweiten Basiskörperteil (31) ausgebildet ist.

15. Unterdruck-Greiferelement (1) nach einem der Ansprüche 12 bis 14, **dadurch gekennzeichnet, dass** im Versorgungsabschnitt (20) ein Unterdruck-Versorgungsanschluss (21), insbesondere wenigstens eine werkzeuglos betätigbare Schlauchkupplung (22), ausgebildet ist und mit dem Unterdruck-Versorgungskanal (3) strömungsverbunden ist und dass der Unterdruck-Versorgungsanschluss (21) über einen Schlauch (23) mit einer Unterdruckerzeugungsvorrichtung bedarfsweise verbindbar ist.

16. Unterdruck-Greiferelement (1) nach einem der vorhergehenden Ansprüche, **dadurch gekennzeichnet, dass** der Unterdruck-Versorgungskanal (3) nach dem formschlüssigen Verbinden des ersten Basiskörperteils (30) gegenüber dem zweiten Basiskörperteil (31) mittels der Rastkupplung (8') strömungsdicht ausgebildet ist.

17. Unterdruck-Greiferelement (1) nach einem der vorhergehenden Ansprüche, **dadurch gekennzeichnet, dass** das erste Befestigungsmittel (5) durch einen in einer ringnutförmigen Außenmantel-Einkerbung (36) an der äußeren Mantelfläche (37) des ersten Basiskörperteils (30) angeordneten Federring (38) gebildet ist.

18. Unterdruck-Greiferelement (1) nach einem der vorhergehenden Ansprüche, **dadurch gekennzeichnet, dass** das erste Befestigungsmittel (5) durch ein an der äußeren Mantelfläche (37) des ersten Basiskörperteils (30) angeordnetes Gewinde gebildet ist.

19. Unterdruck-Greiferelement (1) nach einem der vorhergehenden Ansprüche, **dadurch gekennzeichnet, dass** der erste Basiskörperteil (30) ausgehend vom Dichtelement (4) in Richtung zu einem axialen Stirnende (15) durch wenigstens eine Flanschfläche (39) begrenzt ist.

20. Unterdruck-Greifervorrichtung (24) welche dazu ausgebildet ist, bei Beaufschlagung mit Unterdruck ein zu transportierendes Bauteil anzusaugen oder zu halten, umfassend eine Tragvorrichtung (6) und wenigstens ein mit der Tragvorrichtung (6) bedarfsweise lösbar verbundenes Unterdruck-Greiferelement (1) nach einem der vorhergehenden Ansprüche.

21. Unterdruck-Greifervorrichtung (24) nach Anspruch 20, **dadurch gekennzeichnet, dass** die Tragvorrichtung (6) wenigstens einen Durchbruch (25) zur Aufnahme eines hohlzylindrischen Befestigungsabschnittes (9) des wenigstens einen Unterdruck-Greiferelements (1) aufweist.

22. Unterdruck-Greifervorrichtung (24) nach Anspruch 21, **dadurch gekennzeichnet, dass** es sich bei dem wenigstens einen Durchbruch (25) um eine kreisrunde Bohrung (26) handelt.

23. Unterdruck-Greifervorrichtung (24) nach Anspruch 22, **dadurch gekennzeichnet, dass** die kreisrunde Bohrung (26) ein Gewinde zur Aufnahme des ersten Basiskörperteils (30) aufweist.

24. Unterdruck-Greifervorrichtung (24) nach einem der Ansprüche 20 bis 23, **dadurch gekennzeichnet, dass** die Tragvorrichtung (6) in einem zentralen Abschnitt ein Kupplungsmittel (27) zur bedarfsweisen Verbindung mit einem Manipulator aufweist.

25. Unterdruck-Greifervorrichtung (24) nach einem der Ansprüche 20 bis 24, **dadurch gekennzeichnet, dass** die Tragvorrichtung (6) ein plattenförmiges Tragelement (28) umfasst, welches plattenförmige Tragelement (28) eben ausgebildet ist, oder in seinem Querschnitt hutschienenförmig oder C-förmig ausgebildet ist.

26. Unterdruck-Greifervorrichtung (24) nach Anspruch 25 **dadurch gekennzeichnet, dass** die Hauptachse (7) des Unterdruck-Greiferelements (1) in einem rechten Winkel zum plattenförmigen Tragelement (28) angeordnet ist.

## Claims

1. A vacuum gripping element (1), which is configured to suck or hold a component to be transported when subjected to a vacuum, comprising
- a base body (2) with at least one vacuum supply channel (3),
- an elastic, form-flexible sealing element (4), which is connected to the base body (2) and is provided for sealing contact with the component to be transported,
- a first fastening means (5) on the base body (2) for fastening the vacuum gripping element (1) on a carrying device (6), wherein the base body (2) and the sealing element (4) are arranged along a main axis (7) of the vacuum gripping element (1),
wherein the first fastening means (5) is formed by a locking coupling (8) for positively connecting and releasing the vacuum gripping element (1) relative to the carrying device (6) as required,
or the base body (2) comprises a first base body part (30) and a second base body part (31), said first base body part (30) being provided for positively connecting and releasing relative to the carrying device (6) as required by means of the first fastening means (5), and said second base body part (31) being connected to the elastic,
form-flexible sealing element (4), and a second fastening means (32) for positively connecting and releasing the first base body part (30) relative to the second base body part (31) is formed by a locking coupling (8`), and
wherein the base body (2) comprises a hollow-cylindrical fastening section (9) in which the locking coupling (8, 8') is formed, and
wherein the locking coupling (8, 8`) comprises an actuator element (10), a spring element (11) and at least one locking element (12), wherein the spring element (11) urges the actuator element (10) into an end position, and wherein the at least one locking element (12) is urged into a locking position by the actuator element (10),
wherein the actuator element (10) is arranged within the hollow-cylindrical fastening section (9) and is mounted so as to be adjustable along the main axis (7), and
wherein the actuator element (10) comprises an actuating surface (17) which is provided for the application of pressure starting out from a constructionally separate, pin-shaped actuating tool (18).

2. The vacuum gripping element (1) according to claim 1, **characterized in that** the at least one locking element (12) is mounted so as to be adjustable radially to the main axis (7).

3. The vacuum gripping element (1) according to one of claims 1 or 2, **characterized in that** at least one locking element (12) is embodied as a ball (13), in particular by at least three, preferably five, balls (13) arranged so as to be distributed across the circumference of the hollow-cylindrical fastening section (9).

4. The vacuum gripping element (1) according to one of preceding claims, **characterized in that** the actuator element (10) is embodied in the form of a slider or piston and, on its outer lateral surface of the actuator element (33), has at least one contact surface (14) to the at least one locking element (12) that is inclined relative to the main axis (7).

5. The vacuum gripping element (1) according to one of the preceding claims, **characterized in that** an annular-groove-shaped inner jacket indentation (35) is formed on an inner lateral surface (34) of the second base body part (31) for receiving the at least one locking element (12).

6. The vacuum gripping element (1) according to one of the preceding claims, **characterized in that** the hollow-cylindrical fastening section (9) is limited by at least one stop surface (16) starting from its axial end face (15) in the direction towards the sealing element (4).

7. The vacuum gripping element (1) according to one of the preceding claims, **characterized in that** a force effect of the spring element (11) acts on the actuator element (10) starting out from a free axial end face (15) of the base body (2) in the direction towards the sealing element (4).

8. The vacuum gripping element (1) according to one of the preceding claims, **characterized in that** a force effect of the spring element (11) acts on the actuator element (10) starting out from the sealing element (4) in the direction towards a free axial end face (15) of the base body (2).

9. The vacuum gripping element (1) according to one of the preceding claims, **characterized in that** the actuator element (10) has vacuum effect surface (19) limiting the vacuum supply channel (3), said vacuum effect surface (19) being dimensioned such that when a vacuum is present in the vacuum supply channel (3), the actuator element (10) is increasingly urged into the direction of the axial end position in which the at least one locking element (12) is urged into a locking position by the actuator element (10).

10. The vacuum gripping element (1) according to one of the preceding claims, **characterized in that** a locking valve, in particular a back pressure valve, is formed in the vacuum supply channel (3), said locking valve closing the vacuum supply channel (3) in the direction towards the sealing element (4) when a vacuum is present in the vacuum supply channel (3).

11. The vacuum gripping element (1) according to claim 10, **characterized in that** the actuator element (10) comprises an excess pressure effect surface limiting the vacuum supply channel (3), said excess pressure effect surface being dimensioned such that when an excess pressure is present in the vacuum supply channel (3), the actuator element (10) is urged into the direction of its position deactivating the at least one locking element (12).

12. The vacuum gripping element (1) according to one of the preceding claims, **characterized in that** a supply section (20) is formed between the hollow-cylindrical fastening section (9) and the sealing element (4) in relation to the main axis (7).

13. The vacuum gripping element (1) according to claim 12, **characterized in that** the supply section (20) is formed for supplying the vacuum gripping element (1) with a vacuum at the first base body part (30).

14. The vacuum gripping element (1) according to claim 12, **characterized in that** the supply section (20) is formed for supplying the vacuum gripping element (1) with a vacuum at the second base body part (31).

15. The vacuum gripping element (1) according to one of claims 12 to 14, **characterized in that** a vacuum supply connection (21), in particular at least one hose coupling (22) that can be actuated without a tool, is formed in the supply section (20) and is fluidically connected to the vacuum supply channel (3) and that the vacuum supply connection (21) can be connected to a vacuum generator device via a hose (23) if required.

16. The vacuum gripping element (1) according to one of the preceding claims, **characterized in that** the vacuum supply channel (3) is embodied being flow-tight after positively connecting the first base body part (30) relative to the second base body part (31) by means of the locking coupling (8').

17. The vacuum gripping element (1) according to one of the preceding claims, **characterized in that** the first fastening means (5) is formed by a spring ring (38) arranged in an annular-groove-shaped outer jacket indentation (36) on the outer lateral surface (37) of the first base body part (30).

18. The vacuum gripping element (1) according to one of the preceding claims, **characterized in that** the first fastening means (5) is formed by a thread arranged on the outer lateral surface (37) of the first base body part (30).

19. The vacuum gripping element (1) according to one of the preceding claims, **characterized in that** the first base body part (30) is limited by at least one flange surface (39) starting out from the sealing element (4) in the direction towards an axial end face (15).

20. A vacuum gripping device (24), which is configured to suck or hold a component to be transported when subjected to a vacuum, comprising
a carrying device (6) and at least one vacuum gripping element (1) according to one of the preceding claims which is connected to the carrying device (6) so as to be releasable as required.

21. The vacuum gripping device (24) according to claim 20, **characterized in that** the carrying device (6) comprises at least one opening (25) for receiving a hollow-cylindrical fastening section (9) of the at least one vacuum gripping element (1).

22. The vacuum gripping device (24) according to claim 21, **characterized in that** the at least one opening (25) is a circular bore (26).

23. The vacuum gripping device (24) according to claim 22, **characterized in that** the circular bore (26) comprises a thread for receiving the first base body part (30).

24. The vacuum gripping device (24) according to one of claims 20 to 23, **characterized in that** the carrying device (6) comprises a coupling means (27) for connection to a manipulator as required in a central section.

25. The vacuum gripping device (24) according to one of claims 20 to 24, **characterized in that** the carrying device (6) comprises a plate-shaped carrier element (28), said plate-shaped carrier element (28) being plane or having a DIN-rail-shaped or C-shaped cross section.

26. The vacuum gripping device (24) according to claim 25, **characterized in that** the main axis (7) of the vacuum gripping element (1) is arranged at a right angle to the plate-shaped carrier element (28).

## Revendications

1. Élément préhenseur à dépression (1), qui est conçu, lorsqu'il est alimenté avec une dépression, pour aspirer ou maintenir un composant à transporter, comprenant
- un corps de base (2) avec au moins un canal d'alimentation en dépression (3),
- un élément d'étanchéité flexible élastique (4) qui est relié avec le corps de base (2) et qui est conçu pour s'appuyer de manière étanche contre le composant à transporter,
- un premier moyen de fixation (5) sur le corps de base (2) pour la fixation de l'élément préhenseur à dépression (1) à un dispositif porteur (6), dans lequel le corps de base (2) et l'élément d'étanchéité (4) sont disposés le long d'un axe principal (7) de l'élément préhenseur à dépression (1),
dans lequel le premier moyen de fixation (5) est constitué d'un couplage par encliquetage (8) pour le raccordement par complémentarité de forme et le détachement, si nécessaire, de l'élément préhenseur à dépression (1) par rapport au dispositif porteur (6),
ou le corps de base (2) comprend une première partie de corps de base (30) et une deuxième partie de corps de base (31), la première partie de corps de base (30) étant conçue, au moyen du premier moyen de fixation (5), pour le raccordement par complémentarité de forme et le détachement, si nécessaire, par rapport au dispositif porteur (6), et la deuxième partie de corps de base (31) étant reliée avec l'élément d'étanchéité flexible élastique (4) et un deuxième moyen de fixation (32) est constitué d'un couplage par encliquetage (8') pour le raccordement par complémentarité de forme et le détachement, si nécessaire de la première partie de corps de base (30) par rapport à la deuxième partie de corps de base (31) et
dans lequel le corps de base (2) présente une portion de fixation cylindrique creuse (9) dans laquelle le couplage par encliquetage (8, 8') est réalisé et
dans lequel le couplage par encliquetage (8, 8') comprend un élément d'actionnement (10), un élément de ressort (11) et au moins un élément d'encliquetage (12), dans lequel l'élément de ressort (11) comprime l'élément d'actionnement (10) vers une position finale et dans lequel l'au moins un élément d'encliquetage (12) est comprimé par l'élément d'actionnement (10) vers une position de verrouillage,
dans lequel l'élément d'actionnement (10) est disposé à l'intérieur de la portion de fixation cylindrique creuse (9) et est logé de manière mobile le long de l'axe principal (7) et
dans lequel l'élément d'actionnement (10) présente une surface d'actionnement (17) qui est prévue pour être sollicitée par une pression à partir d'un outil d'actionnement en forme de tige (18) séparé.

2. Élément préhenseur à dépression (1) selon la revendication 1, **caractérisé en ce que** l'au moins un élément d'encliquetage (12) est logé de manière mobile radialement par rapport à l'axe principal (7).

3. Élément préhenseur à dépression (1) selon l'une des revendications 1 ou 2, **caractérisé en ce que** l'au moins un élément d'encliquetage (12) présente la forme d'une sphère (13), plus particulièrement elle est constituée d'au moins trois, préférence cinq, sphères (13) réparties sur la circonférence de la portion de fixation cylindrique creuse (9).

4. Élément préhenseur à dépression (1) selon l'une des revendications précédentes, **caractérisé en ce que** l'élément d'actionnement (10) est conçu sous la forme d'un curseur ou d'un piston et comprend, sur sa surface d'enveloppe d'élément d'actionnement (33), au moins une surface de contact (14), inclinée par rapport à l'axe principal (7), avec l'au moins un élément d'encliquetage (12).

5. Élément préhenseur à dépression (1) selon l'une des revendications précédentes, **caractérisé en ce que**, sur une surface d'enveloppe interne (34) de la deuxième partie de corps de base (31), est réalisée une encoche d'enveloppe interne en forme de rainure annulaire (35) pour le logement de l'au moins un élément d'encliquetage (12).

6. Élément préhenseur à dépression (1) selon l'une des revendications précédentes, **caractérisé en ce que** la portion de fixation cylindrique creuse (9) est limitée, à partir d'une extrémité frontale axiale (15) en direction de l'élément d'étanchéité (4), par au moins une surface de butée (16).

7. Élément préhenseur à dépression (1) selon l'une des revendications précédentes, **caractérisé en ce que** l'application d'une force par l'élément de ressort (11) sur l'élément d'actionnement (10) agit à partir d'une extrémité frontale axiale libre (15) du corps de base (2) en direction de l'élément d'étanchéité (4).

8. Élément préhenseur à dépression (1) selon l'une des revendications précédentes, **caractérisé en ce que** l'application d'une force par l'élément de ressort (11) sur l'élément d'actionnement (10) agit à partir de l'élément d'étanchéité (4) en direction d'une extrémité frontale axiale libre (15) du corps de base (2).

9. Élément préhenseur à dépression (1) selon l'une des revendications précédentes, **caractérisé en ce que** l'élément d'actionnement (10) présente une surface d'action de dépression (19) limitant le canal d'alimentation en dépression (3), cette surface d'action de dépression (19) étant dimensionnée de sorte que, lors de l'existence d'une dépression dans le canal d'alimentation en dépression (3), l'élément d'actionnement (10) est comprimé de manière supplémentaire en direction de la position finale axiale dans laquelle l'au moins un élément d'encliquetage (12) est comprimé par l'élément d'actionnement (10) vers une position de verrouillage.

10. Élément préhenseur à dépression (1) selon l'une des revendications précédentes, **caractérisé en ce que**, dans le canal d'alimentation en dépression (3), est prévue une soupape d'arrêt, plus particulièrement un clapet anti-retour, qui, lors de l'existence d'une surpression dans le canal d'alimentation en dépression (3), obture le canal d'alimentation en dépression (3) en direction de l'élément d'étanchéité (4).

11. Élément préhenseur à dépression (1) selon la revendication 10, **caractérisé en ce que** l'élément d'actionnement (10) présente une surface d'action de surpression limitant le canal d'alimentation en dépression (3), cette surface d'action de surpression étant dimensionnée de sorte que, lors de l'existence d'une surpression dans le canal d'alimentation en dépression (3), l'élément d'actionnement (10) est comprimé en direction de sa position désactivant l'au moins un élément d'encliquetage (12).

12. Élément préhenseur à dépression (1) selon l'une des revendications précédentes, **caractérisé en ce que**, par rapport à l'axe principal (7), entre la portion de fixation cylindrique creuse (9) et l'élément d'étanchéité (4), est réalisée une portion d'alimentation (20).

13. Élément préhenseur à dépression (1) selon la revendication 12, **caractérisé en ce que** la portion d'alimentation (20) est conçue pour l'alimentation de l'élément préhenseur à dépression (1) avec une dépression au niveau de la première partie de corps de base (30).

14. Élément préhenseur à dépression (1) selon la revendication 12, **caractérisé en ce que** la portion d'alimentation (20) est conçue pour l'alimentation de l'élément préhenseur à dépression (1) avec une dépression au niveau de la deuxième partie de corps de base (31).

15. Élément préhenseur à dépression (1) selon l'une des revendications 12 à 14, **caractérisé en ce que**, dans la portion d'alimentation (20), est prévu un raccord d'alimentation en dépression (21), plus particulièrement au moins un couplage de tuyau (22) actionnable sans outil, qui est relié en écoulement avec le canal d'alimentation en dépression (3) et **en ce que** le raccord d'alimentation en dépression (21) peut être relié, si nécessaire, par l'intermédiaire d'un tuyau (23), avec un dispositif de production de dépression.

16. Élément préhenseur à dépression (1) selon l'une des revendications précédentes, **caractérisé en ce que** le canal d'alimentation en dépression (3) est réalisé, après le raccordement par complémentarité de forme de la première partie de corps de base (30) avec la deuxième partie de corps de base (31), de manière étanche à l'écoulement au moyen du couplage par encliquetage (8').

17. Élément préhenseur à dépression (1) selon l'une des revendications précédentes, **caractérisé en ce que** le premier moyen de fixation (5) est constitué d'une bague ressort (38) disposée dans une encoche d'enveloppe externe en forme de rainure annulaire (36) sur la surface d'enveloppe externe (37) de la première partie de corps de base (30).

18. Élément préhenseur à dépression (1) selon l'une des revendications précédentes, **caractérisé en ce que** le premier moyen de fixation (5) est constitué d'un filetage disposé sur la surface d'enveloppe externe (37) de la première partie de corps de base (30).

19. Élément préhenseur à dépression (1) selon l'une des revendications précédentes, **caractérisé en ce que** la première partie de corps de base (30) est limitée à partir de l'élément d'étanchéité (4) en direction d'une extrémité frontale axiale (15) par au moins une surface de bride (39).

20. Dispositif préhenseur à dépression (24) qui est conçu, lorsqu'il est alimenté avec une dépression, pour aspirer ou maintenir un composant à transporter, comprenant
- un dispositif porteur (6) et au moins un élément préhenseur à dépression (1), relié de manière amovible, si nécessaire avec le dispositif porteur (6), selon l'une des revendications précédentes

21. Dispositif préhenseur à dépression (24) selon la revendication 20, **caractérisé en ce que** le dispositif porteur (6) présente un perçage (25) pour le logement d'une portion de fixation cylindrique creuse (9) de l'au moins un élément préhenseur à dépression (1).

22. Dispositif préhenseur à dépression (24) selon la revendication 21, **caractérisé en ce que** l'au moins un perçage (25) est un alésage circulaire (26).

23. Dispositif préhenseur à dépression (24) selon la revendication 22, **caractérisé en ce que** l'alésage circulaire (26) présente un filetage pour le logement de la première partie de corps de base (30).

24. Dispositif préhenseur à dépression (24) selon l'une des revendications 20 à 23, **caractérisé en ce que** le dispositif porteur (6) présente, dans une portion centrale, un moyen de couplage (27) pour le raccordement, si nécessaire, avec un manipulateur.

25. Dispositif préhenseur à dépression (24) selon l'une des revendications 20 à 24, **caractérisé en ce que** le dispositif porteur (6) comprend un élément porteur en forme de plaque (28), cet élément porteur en forme de plaque (28) étant plat ou présentant en section transversale la forme d'un profilé chapeau ou la forme d'un C.*

26. Dispositif préhenseur à dépression (24) selon la revendication 25, **caractérisé en ce que** l'axe principal (7) de l'élément préhenseur à dépression (1) est disposé avec un angle droit par rapport à l'élément porteur en forme de plaque (28).
